# EUROPÄISCHE PATENTANMELDUNG

(11) **EP 2 184 033 A1**
(43) Veröffentlichungstag der Anmeldung: **12.05.2010**
(21) Anmeldenummer: 08019351.9
(22) Anmeldetag: 05.11.2008
(51) Int. Cl.: A61C 17/32

(54) **Elektrische Zahnbürste sowie Bürstenkopf hierfür**

(71) Anmelder: Braun GmbH, 61476 Kronberg/Taunus (DE)
(72) Erfinder: Driesen, Georges, 61276 Weilrod (DE); Reick, Hansjörg, 61449 Steinbach (DE); Schamberg, Stefan, 61250 Usingen (DE); Schmid, Michael, 60599 Frankfurt/Main (DE); Schaefer, Norbert, 60320 Frankfurt/Main (DE); Thurnay, Eva Susamme Dominique, 65929 Frankfurt/Main (DE); McGarry, Rory, 60385 Frankfurt/Main (DE)

(57) **Zusammenfassung**

Die vorliegende Erfindung betrifft eine elektrische Zahnbürste sowie einen Bürstenkopf hierfür, mit einem vorzugsweise plattenförmigen Borstenträger, der ein Borstenfeld trägt, das eine vorzugsweise senkrecht zum Borstenträger stehende Borstenfeldhauptachse besitzt, Antriebs- und/oder Übertragermittel zum räumlich mehrdimensionalen Antreiben des Borstenträgers rotatorisch oszillierend um eine Rotationsachse sowie stochernd hin- und hergehend entlang einer Stocherachse, sowie mit Verbindungsmitteln zum Verbinden des Bürstenkopfs mit einem Zahnbürstenhandteil, wobei im verbundenen Zustand sich eine Bürstenkopflängsachse etwa parallel zu einer Zahnbürstenlängsachse erstreckt. Erfindungsgemäß ist der Borstenträger mit dem Borstenfeld zur Bürstenkopflängsachse bzw. Zahnbürstenlängsachse verkippt angeordnet derart, dass die Borstenfeldhauptachse zu einer Senkrechten auf die Zahnbürsten- und/oder Bürstenkopflängsachse spitzwinklig geneigt ist.

## Beschreibung

Die vorliegende Erfindung betrifft eine elektrische Zahnbürste sowie einen Bürstenkopf hierfür, mit einem vorzugsweise plattenförmigen Borstenträger, der ein Borstenfeld trägt, das eine vorzugsweise senkrecht zum Borstenträger stehende Borstenfeldhauptachse besitzt, Antriebs- und/oder Übertragermittel zum räumlich mehrdimensionalen Antreiben des Borstenträgers rotatorisch oszillierend um eine Rotationsachse sowie stochernd hin- und hergehend entlang einer Stocherachse, sowie mit Verbindungsmitteln zum Verbinden des Bürstenkopfs mit einem Zahnbürstenhandteil, wobei im verbundenen Zustand sich eine Bürstenkopflängsachse etwa parallel zu einer Zahnbürstenlängsachse erstreckt.

Elektrische Zahnbürsten besitzen regelmäßig rotatorisch oszillierend antreibbare Borstenträger mit darauf gelagerten Borstenfeldern, deren Hauptachse sich etwa rechtwinklig zur Zahnbürstenlängsachse erstreckt, die durch den Zahnbürstenhandteil und/oder den durch ein Bürstenrohr gebildeten Zahnbürstenhals definiert wird. Durch die Rotation um eine Drehachse in der Mitte des Bürstenkopfs ergibt sich in der Benutzung eine automatische Zentrierung des Bürstenkopfs um den jeweils zu putzenden Zahn herum. Die in Zahnbürstenlängsrichtung von der Rotationsachse am weitesten beabstandeten Borstenbüschel bewegen sich in den Senken zwischen zwei Zähnen bzw. den Zahnzwischenräumen hin und her, während die Rotationsachse in der Mitte des Borstenfelds mittig auf die entsprechende Zahnflanke gerichtet ist. Eine solche Zentrierwirkung ergibt sich insbesondere dann, wenn das Borstenfeld umfangsseitig höhere Borsten bzw. eine zentrale Borstenfeldvertiefung aufweist. Eine solche Zahnbürste zeigt beispielsweise die EP 0835081 B1.

Um insbesondere die Reinigung der Interdentalräume zu verbessern sowie Plaque besser zu lösen, ist es hierbei bekannt, das Borstenfeld nicht nur rotatorisch oszillierend anzutreiben, sondern auch in einer Stocherbewegung im Wesentlichen parallel zur Borstenfeldhauptachse hin- und hergehend zu bewegen. Erfolgt eine solche Stocherbewegung zusätzlich zur rotatorischen Oszillationsbewegung, spricht man üblicherweise von einer 3D-Zahnbürste bzw. einem räumlich oder mehrdimensional antreibbaren Borstenfeld, da sich die Borstenspitzen in allen drei Dimensionen im Raum bewegen. Eine solchermaßen kombinierte räumliche Borstenfeldbewegung erhält den zuvor genannten Autozentriereffekt und hat sich hinsichtlich der Reinigungsleistung als effektiver herausgestellt.

Eine solche Stocherbewegung in Richtung der Borstenfeldhauptachse führt indes üblicherweise zu recht hohen Kräften auf die Zahnoberflächen und das Zahnfleisch, was bisweilen als unangenehm empfunden wird, da die Stocherbewegung im Wesentlichen in Form von Stechbewegungen senkrecht auf das Zahnfleisch zu ausgeführt wird. Um diesbezüglich kein zu unangenehmes Putzempfinden zu erzeugen, wurde vorgeschlagen, die Amplitude der Stocherbewegung zu begrenzen und faktisch recht klein auszubilden. Dies wiederum führt jedoch zu einer Reduzierung der Putzeffektivität, da die Eindringtiefe in die Zahnzwischenräume relativ begrenzt bleibt.

Alternativ zu solchen Bürstenköpfen mit Stocherbewegung im Wesentlichen parallel zur Borstenfeldhauptachse wurden Zahnbürsten mit einem Unwuchtantrieb im Bürstenkopf und schräg gestelltem Bürstenkopf vorgeschlagen, wodurch sich der Bürstenkopf und auch die Borsten auf einer Kreisbahn oder einer Ellipse bewegen. Da es keine Drehachse im Zentrum des Bürstenkopfs gibt, um die der Kopf rotatorisch oszilliert, bleibt bei derartigen Zahnbürsten jedoch der eingangs genannte Autozentriereffekt aus. Bereits bei geringem Andruck hüpft die Zahnbürste geradezu auf den Zähnen in allen Richtungen herum und lässt sich schlecht positionieren. Bei höherem Andruck bricht sogar die Reinigungsleistung antriebsbedingt stark ein, so dass der Bürstenkopf wie bei einer Handzahnbürste in Hin- und Herbewegungen über die Zähne geführt werden muss. Eine Zentrierung des Bürstenkopfs relativ zum Zahn über eine Drehachse im Zentrum des Borstenfelds erfolgt jedoch dann natürlich gar nicht mehr.

Andererseits wurde bei den Zahnbürsten bzw. Bürstenköpfen der zuvor genannten Art, die mit einer rotatorisch oszillierenden Drehbewegung um eine Rotationsachse sowie zusätzlich mit einer Stocherbewegung in Richtung dieser Rotationsachse arbeiten, zur Erzeugung eines "weicheren" Putzgefühls auch bereits vorgeschlagen, dünnere Borsten zu verwenden, die sehr viel leichter einknicken, wodurch die Stechbewegungen senkrecht auf das Zahnfleisch als weniger unangenehm empfunden werden. Durch eine derartige Durchmesserreduzierung der Borsten sinkt jedoch deren Reinigungsleistung drastisch, wenn diese - was regelmäßig der Fall ist - im gebogenen Zustand über die Zahnoberfläche geführt werden. Insofern bringt auch diese Maßnahme der Durchmesserreduzierung keine Lösung für das genannte Dilemma, wonach einerseits mit Stocherbewegungen einer ausreichend hohen Amplitude bei ausreichenden Putzkräften eine gute Reinigungswirkung erzielt werden soll, während andererseits der Putzvorgang sanft zum Zahnfleisch ist.

Hiervon ausgehend liegt der vorliegenden Erfindung die Aufgabe zugrunde, eine verbesserte elektrische Zahnbürste sowie einen verbesserten Bürstenkopf hierfür, jeweils entsprechend der eingangs genannten Art, zu schaffen, die Nachteile des Standes der Technik vermeiden und Letzteren in vorteilhafter Weise weiterbilden. Vorzugsweise soll einerseits eine effektive, auch tief in Interdentalräume hineingehende Zahnreinigung ermöglicht und andererseits ein sanftes Putzempfinden erreicht werden, ohne die Autozentrierwirkung der Borstenfeldbewegung zu opfern.

Erfindungsgemäß wird diese Aufgabe durch einen Bürstenkopf für eine elektrische Zahnbürste gemäß Anspruch 1 sowie eine elektrische Zahnbürste mit einem solchen Bürstenkopf gemäß Anspruch 21 gelöst. Bevorzugte Ausgestaltungen der Erfindung sind Gegenstand der abhängigen Ansprüche.

Es wird also vorgeschlagen, den Borstenträger mit dem Borstenfeld, das räumlich um eine Rotationsachse rotatorisch oszillierend sowie entlang einer Stocherachse stochernd hin- und hergehend antreibbar ist, in spezieller Weise anzustellen, so dass die Borstenbüschel bei der Stocherbewegung nicht genau senkrecht auf die Zahn- oder Zahnfleischoberfläche treffen, nichtsdestotrotz jedoch bei Drehung/Schwenkung um die Oszillations- bzw. Rotationsachse eine Selbstzentrierung des Borstenfelds bewirken. Erfindungsgemäß ist der Borstenträger mit dem Borstenfeld zur Bürstenkopflängsachse (die die Mittelachse des rotationssymetrischen Bürstenkopfrohres bildet) bzw. Zahnbürstenlängsachse verkippt angeordnet derart, dass die Borstenfeldhauptachse zu einer Senkrechten auf die Zahnbürsten- und/oder Bürstenkopflängsachse spitzwinklig geneigt ist. Durch das Verkippen des Borstenträgers aus der bei räumlich, d.h. rotatorisch oszillierend sowie stochernd antreibbaren Borstenträgern üblichen "geraden" Ausrichtung, bei der sich die Borstenfeldhauptachse senkrecht zur Zahnbürstenlängsachse erstreckt, in eine leicht verkippte, "schiefe" Ausrichtung kann trotz der Stocherbewegungen des Borstenfelds ein angenehmes Putzgefühl auch am Zahnfleisch erreicht werden, da das Borstenfeld mit seiner Hauptachse und damit die Mehrzahl der Borsten leicht schräg auf die zu putzende Oberfläche gesetzt werden. Damit wird der Knickstabfall, bei dem die Reaktionskräfte der Stocherbewegung exakt in Längsrichtung in die Borsten eingeleitet wird, weitgehend vermieden und kann nur noch bei Oberflächen auftreten, die zufällig um den entsprechenden Winkel geneigt sind. Dies ist jedoch relativ selten, da der Benutzer die Zahnbürste üblicherweise senkrecht auf die Zähne aufsetzt. Dennoch wird durch die rotatorische Oszillationsbewegung der gewünschte Selbstzentriereffekt erzielt, der die Zahnbürste satt und ruhig auf dem zu putzenden Zahn sitzen lässt.

In Weiterbildung der Erfindung ist der Borstenträger mit dem darauf angeordneten Borstenfeld zur Zahnbürsten- bzw. Bürstenkopflängsachse derart verkippt, dass die Borstenfeldhauptachse, die sich senkrecht zur Oberfläche des Borstenträgers und/oder parallel zur Mehrzahl der Borstenbüschel erstreckt, zu einer Senkrechten auf die Zahnbürsten- bzw. Bürstenkopflängsachse unter einem Winkel von etwa 2,5° bis 25°, insbesondere 3° bis 17° geneigt ist. Bereits bei recht kleinen Verkippungswinkeln von mehr als 2,5°, vorzugsweise mehr als 3° lässt sich die Knickstabproblematik bei der Stocherbewegung des Borstenfelds und die daraus resultierenden hohen Stichkräfte stark reduzieren, was ein angenehmes Putzgefühl vermittelt. Andererseits ergibt sich bei nicht zu stark verkippten Borstenträgern die gewünschte Zentrierbewegung, die bei Verkippungswinkeln von mehr als 17° und in jedem Fall bei mehr als 25° stark nachlassen würde, wodurch die Handhabung der Zahnbürste erschwert wäre.

Insbesondere kann der genannte Neigungswinkel der Borstenfeldhauptachse zur Senkrechten auf die Zahnbürsten- bzw. Bürstenkopflängsachse 8° +/- 3° betragen, wodurch ein besonders guter Kompromiss aus sanftem Putzempfinden einerseits und einfacher Handhabung mit hoher Putzleistung andererseits erzielt wird.

Um die unangenehmen Nebenwirkungen der Stocherbewegung stärker zu reduzieren, dabei jedoch gleichzeitig keine Nachteile bei der Handhabung wie beispielsweise ein Herumtanzen des Borstenfelds in Kauf nehmen zu müssen, kann es nach einer vorteilhaften Weiterbildung der Erfindung vorgesehen sein, dass das Borstenfeld eine Arbeitsfläche besitzt, die zur Verkippung des Borstenträgers gegenläufig geneigt ist. Hierdurch kann ein stärkeres Verkippen des Borstenträgers mit einer stärkeren Neigung der Borstenfeldhauptachse vorgesehen werden, die in Bezug auf den Sitz des Borstenfelds auf der Zahnoberfläche durch die gegenläufige Schrägstellung der Arbeitsfläche des Borstenfelds kompensiert wird. Durch einen schrägen Verlauf der Arbeitsfläche nicht parallel zur Borstenträgeroberfläche sitzt das Borstenfeld mit seiner Arbeitsfläche auch dann noch passgenau auf der Zahnoberfläche, wenn das Borstenfeld mit seiner Hauptachse stärker verkippt ist.

Die Schräge der Arbeitsfläche des Borstenfelds kann hierbei grundsätzlich verschieden stark ausgebildet sein, wobei mit "Schräge" keine ebene Fläche gemeint sein muß, die nach Art einer schiefen Ebene geneigt ist. Vielmehr kann auch eine gewölbte, insbesondere rinnenförmige gewölbte Arbeitsfläche vorgesehen sein, wobei mit Schräge hierbei eine zu unterschiedlichen Seiten unterschiedlich hohe Rinnenausbildung gemeint ist bzw. die Schräge eine Sekante oder Tangente oder eine sonstige Näherungsweise die Oberflächenform erfassende bzw. charakterisierende Flächenneigung meint.

In bevorzugter Weiterbildung der Erfindung ist hierbei der Neigungswinkel der Arbeitsfläche, der in der genannten Weise die Schräge ggf. auch einer gewölbten Fläche charakterisiert, zu einer Senkrechten auf die Borstenfeldhauptachse betragsmäßig kleiner als der Neigungswinkel der genannten Borstenfeldhauptachse zu einer Senkrechten auf die Zahnbürsten- bzw. Bürstenkopflängsachse. Ist der Borstenträger mit dem darauf befestigten Borstenfeld derart verkippt, dass die Borstenfeldhauptachse zur Senkrechten auf die Zahnbürsten- bzw. Bürstenkopflängsachse unter einem Winkel von 8° +/- 3° geneigt ist, kann in vorteilhafter Ausführung der Erfindung für die Schräge der Arbeitsfläche des Borstenfelds ein Neigungswinkel der Arbeitsfläche zu einer Senkrechten auf die Borstenfeldhauptachse von 1,5° bis 4,5°, insbesondere etwa 3,5° +/- 1 vorgesehen sein. Hierdurch wird gleichermaßen ein sehr sanftes Putzgefühl einerseits sowie eine einfache Handhabung mit Selbstzentriereffekt sowie eine hohe Putzleistung andererseits erreicht.

In Weiterbildung der Erfindung beträgt der Neigungswinkel der Arbeitsfläche des Borstenfelds zur Senkrechten auf die Borstenfeldhauptachse etwa 25% bis 65%, vorzugsweise etwa 40% des Neigungswinkels der genannten Borstenfeldhauptachse zur Senkrechten auf die Zahnbürstenlängsachse.

Grundsätzlich kann der Borstenträger zu verschiedenen Seiten hin verkippt sein. Beispielsweise wäre es grundsätzlich möglich, den Borstenträger zum Zahnbürstenhandteil hin zu kippen, so dass vom Zahnbürstenhandteil aus betrachtet die die Borsten tragende Oberfläche des Borstenträgers zu sehen ist.

In bevorzugter Ausführung der Erfindung jedoch ist der Borstenträger vom Zahnbürstenhandteil weg gekippt derart, dass zwischen der Borstenfeldhauptachse und einem dem Zahnbürstenhandteil zugewandten Abschnitt der Zahnbürsten- bzw. Bürstenkopflängsachse ein stumpfer Winkel vorgesehen ist. Mit anderen Worten ausgedrückt liegt bei horizontaler Ausrichtung der Zahnbürstenlängsachse ein dem Zahnbürstenhandteil zugewandtes Ende des Borstenträgers bzw. ein dort angeordneter Borstenfeldabschnitt höher als ein vom Zahnbürstenhandteil abgewandtes Ende des Borstenträgers bzw. ein dort angeordneter Borstenfeldabschnitt.

Der Borstenträger und/oder das Borstenfeld kann grundsätzlich verschiedene Außenumrisskonturen besitzen, wobei der Borstenträger insbesondere rund ausgebildet ist. In besonders vorteilhafter Weiterbildung der Erfindung ist der Borstenträger hierbei jedoch nicht kreisrund ausgebildet, sondern mit einer von der Kreisform abweichenden Form versehen. Insbesondere kann der Borstenträger oval oder ellipsenförmig oder in ähnlicher Weise leicht flachgedrückt ausgebildet sein. Alternativ oder zusätzlich kann zumindest die äußere Reihe bzw. der äußere Ring von Borstenbüscheln auf einem Oval oder einer Ellipse bzw. einem in ähnlicher Weise flachgedrückten Ring angeordnet sein.

Die Borstenbüschel sind hierbei in der Draufsicht auf den Borstenträger betrachtet vorteilhafterweise symmetrisch bezüglich der Hauptachsen des Borstenträgers und/oder rotationssymmetrisch angeordnet, insbesondere derart, dass die Borstenbüschel bzw. ihre Befestigungsorte auf dem Borstenträger durch eine 180-Grad-Drehung ineinander überführbar sind.

Alternativ oder zusätzlich kann das Borstenfeld jedoch in einer Seitenansicht betrachtet, insbesondere quer zur Zahnbürstenlängsachse, eine asymmetrische Konturierung besitzen, insbesondere dergestalt, dass das Höhenprofil zu einer Seite hin stärker ansteigt als zur anderen, so daß die Arbeitsfläche des Borstenfelds, die von den freien Enden der Borsten definiert wird, eine Schräge besitzt und nicht parallel zur Borstenträgeroberfläche verläuft.

In Weiterbildung der Erfindung besitzt das Borstenfeld eine zentrale Vertiefung in den von den freien Enden der Borstenbüschel definierten Arbeitsfläche, die vorteilhafterweise einen rinnenförmigen Boden besitzen kann, der in eine Richtung gewölbt ist und in der dazu senkrechten Richtung im Wesentlichen gerade ausgebildet ist. Durch eine derartige, im Wesentlichen einachsig gewölbte Senke in einem mittleren Abschnitt des Borstenfeldes bzw. dessen Arbeitsoberfläche kann nicht nur ein besseres Aufnehmen der Zahnpaste oder eines ähnlichen, gelartigen Zahnreinigungsmittels erreicht werden, sondern vor allen Dingen eine bessere Zahnreinigungswirkung mit einem angenehmeren, sanfteren Putzgefühl. Die zu gegenüberliegenden Umfangsseiten hin ansteigende Kontur der Arbeitsfläche schmiegt sich besser an die seitlichen Zahnflanken an, die sozusagen passgenau eingehüllt werden, so dass insbesondere auch die an die Zahnzwischenräume angrenzenden Abschnitte der Zahnflanken besser gereinigt werden.

Im Gegensatz zu Borstenfeldern mit ebenen Vertiefungen in der Mitte müssen sich nicht erst die allerinnersten, d.h. mittigen Büschel wegbiegen. Vielmehr schmiegen sich die Borstenbüschel auch bereits ohne Wegbiegen passgenau an die Seitenflanken der Zähne an. Zudem ergibt sich ein sanfteres Putzgefühl, insbesondere beim Hinwegbewegen des Bürstenkopfs von einem Zahn zum nächsten, da aufgrund der variierenden Borstenbüschelhöhe auch im zentralen Bereich beim Hinwegschieben über eine Zahnflanke nacheinander einzelne Büschel weggedrückt werden bzw. der Bürstenkopf sozusagen entlang der gewölbten Oberfläche der Vertiefung um die Flanke des nächsten Zahns herumgeschoben wird, ohne dass der Bürstenkopf sozusagen in die Vertiefung fallen würde. Insbesondere auch bei rotatorischem Antrieb des Borstenfelds ergibt sich überdies eine sanfte Wischbewegung, da die sich um die Zahnflanke schmiegenden Borstenbüschel mit zunehmendem Abstand von der Rotationsachse stärker gebogen werden.

Die rinnenförmige Wölbung des vertieften, zentralen Abschnitts der Borstenfeldoberfläche kann grundsätzlich auf verschiedene Art und Weise erzielt werden. Beispielsweise könnte bei an sich gleichbleibender Länge der Borstenbüschel ein entsprechend gewölbter Borstenträger vorgesehen sein. In Weiterbildung der Erfindung jedoch variieren die Borstenbüschel, insbesondere auch die innen liegenden Borstenbüschel in ihrer Länge derart, dass sie mit ihren freien Enden die genannte rinnenförmige Wölbung definieren. Insbesondere kann die Länge der innen liegenden Borstenbüschel in Richtung der Verwölbung der von den freien Enden definierten Arbeitsfläche mit zunehmendem Abstand von einem Mittelpunkt des Borstenträgers zunehmen derart, dass die genannte rinnenförmige Verwölbung der zentralen Vertiefung definiert wird. Durch eine solchermaßen variierende Länge der Borstenbüschel kann ein sanftes Putzempfinden und ein sanftes Hinwegbewegen des Borstenfelds über die Zähne erzielt werden, da die weiter vorstehenden Borsten aufgrund ihrer größeren Länge sich leichter wegbiegen können.

Um eine möglichst kontinuierliche Verwölbung der Oberfläche der zentralen Vertiefung zu erzielen, besitzen die freien Enden der inneren Borstenbüschel, die die genannte Arbeitsfläche im Bereich der Vertiefung definieren, keine parallel zum Borstenträger verlaufenden Stirnseiten, sondern zur Oberfläche des Borstenträgers spitzwinklig geneigte Stirnflächen, wobei verschiedene innere Borstenbüschel unterschiedlich geneigte Stirnfläche besitzen derart, dass die verschieden geneigten Stirnflächen einander ergänzend den besagten rinnenförmigen Konturverlauf der zentralen Vertiefung definieren. Insbesondere kann die Neigung der Stirnflächen der freien Enden der Borstenbüschel mit zunehmendem Abstand der Borstenbüschel von der Mitte des Borstenträgers zunehmend stärker ausgebildet sein, wodurch sich zu den Umfangsrändern des Borstenfelds hin ein zunehmend steilere Wandung des rinnenförmigen Bodens ergibt.

Grundsätzlich können die Borstenbüschel an ihren freien Enden eine ebene Oberfläche bilden. In diesem Fall definieren die inneren Borstenbüschel die genannte rinnenförmige Wölbung sozusagen in Knickspantform mit von Büschel zu Büschel stufenweise zunehmender Schrägung.

In bevorzugter Weiterbildung der Erfindung jedoch können die freien Enden der inneren Büschel an ihren freien Enden eine nicht ebene, sondern vielmehr bogenförmig gewölbte Stirnfläche besitzen derart, dass die einander ergänzenden freien Enden benachbarter Borstenbüschel eine kontinuierlich gewölbt Hüllfläche definieren, die die zuvor genannte rinnenförmige Senke bildet. Die gewölbten Stirnflächen der einzelnen Büschel sind hierbei vorteilhafterweise einachsig verwölbt, d.h. in sich selbst bereits rinnenförmig gewölbt, so dass sie in einer Richtung einen geradlinigen Verlauf besitzen, während sie in einer dazu senkrechten Richtung eine Wölbung haben.

Der rinnenförmig gewölbte Boden des Zentralbereichs der Arbeitsfläche des Borstenfelds kann grundsätzlich symmetrisch ausgebildet sein, d.h. einen im Wesentlichen parabelförmigen Verlauf besitzen. In diesem Fall steigen die inneren Borstenbüschel mit ihren freien Enden zu gegenüberliegenden Umfangsseiten des Borstenfelds hin im Wesentlichen gleich stark an. Die rinnenförmige Wölbung kann in vorteilhafter Weiterbildung auch Teil eines Zylindermantels sein dessen Radius von z. B. 10 bis 14 mm die Krümmung der rinnenförmigen Wölbung bestimmt.

In Weiterbildung der Erfindung jedoch kann vorteilhafterweise auch ein asymmetrischer Verlauf der Wölbung der zentralen Vertiefung in der Arbeitsfläche des Borstenfelds vorgesehen sein, wobei insbesondere eine bananenförmige Rinnenwölbung vorgesehen sein kann. Hierbei steigen vorteilhafterweise die Borstenbüschel, die die zentrale Vertiefung in der Arbeitsfläche des Borstenfelds definieren, zu gegenüberliegenden Umfangsseiten hin ungleich an, so dass der eine obere Rand der rinnenförmigen Vertiefung höher ist als der gegenüberliegende Rand. Hierdurch kann unter anderem die Tendenz von Benutzern kompensiert werden, den Bürstekopf nicht exakt tangential an die Zahnflanken anzulegen, sondern in einer leicht V-förmigen Anstellung.

Der genannte asymetrische Anstieg ist dabei vorteilhafterweise in der zuvorgenannten Weise gegenläufig zur Verkippung des Borstenträgers bzw. der Borstenfeldhauptachse orientiert.

Um eine weiter verbesserte Reinigungswirkung bezüglich der Zahnzwischenräume zu erzielen, besitzen in Weiterbildung der Erfindung die äußeren, längeren bzw. höheren Borstenbüschel jeweils zumindest eine Abschrägung an den endseitigen Stirnflächen. Insbesondere können die seitlichen Kanten der Stirnflächen nach Art einer Fase angeschrägt sein. Hierdurch können einerseits die genannten längeren äußeren Borstenbüschel besser in die Zahnzwischenräume eindringen. Zum anderen lässt sich der Bürstenkopf auch leichter und sanfter von Zahn zu Zahn bewegen, da die Anschrägungen der umfangsseitig außen liegenden Borstenbüschel das Borstenfeld sozusagen nach Art einer keilförmigen Schrägfläche auf die nächste Zahnflanke heben.

Die äußeren, längeren Borstenbüschel können hierbei grundsätzlich sowohl zur inneren Seite hin als auch zur äußeren Seite hin abgeschrägt sein. In vorteilhafter Ausführung der Erfindung ist hierbei jedoch nur eine Abschrägung auf einer der Seiten des jeweiligen Borstenbüschels vorgesehen, so dass eine ausreichend breite, nicht abgeschrägte Stirnfläche verbleibt, wodurch gleichermaßen in den Zahnzwischenräumen als auch auf den Zahnflanken eine Putzwirkung erzielt wird.

In besonders vorteilhafter Weiterbildung der Erfindung sind hierbei die äußeren, d.h. den inneren Borstenbüscheln abgewandten Kanten der freien Enden der Borstenbüschel abgeschrägt. Hierdurch lässt sich der Bürstenkopf besonders sanft von Zahn zu Zahn schieben.

Die innenseitig vorgesehen Planfläche der äußeren Borstenbüschel ist hierbei vorteilhafterweise höhenmäßig gegenüber den inneren, die rinnenförmige Vertiefung bildenden Borstenbüscheln abgesetzt, so daß ein Höhensprung von der zentralen Vertiefung zu den randseitig vorgesehenen längeren Borsten ausgebildet ist. Hierdurch kann einerseits eine hohe Selbstzentrierwirkung und andererseits eine besonders effektive Interdentalreinigungswirkung erzielet werden.

Alternativ oder zusätzlich kann auch die innenseitige Kante der Stirnfläche der genannten äußeren, längeren Borstenbüschel die Abschrägung aufweisen. Hierdurch schmiegt sich die Arbeitsfläche des Borstenfelds besonders passgenau an die bauchigen Zahnflanken an. Die innenseitige Abschrägung setzt sozusagen die rinnenförmig gewölbte Vertiefung im Zentrum der Arbeitsfläche des Borstenfelds fort.

Je nach Anwendungsfall und Ausbildung der Borstenbüschel kann die Abschrägung an den umfangsseitigen, längeren Borstenbüscheln unterschiedlich stark ausgebildet sein. Eine gute Putzwirkung sowohl zwischen den Zähnen als auch auf deren Oberflächen lässt sich erzielen, wenn die genannte Abschrägung der umfangsseitigen Borstenbüschel unter einem Winkel von etwa 20° bis 60° gegenüber der nicht abgeschrägten Stirnfläche des genannten Borstenbüschels geneigt ist. Die Tiefe der Abschrägung kann hierbei grundsätzlich verschieden gewählt sein, wobei es sich als vorteilhafter Kompromiß zwischen Leichtgängigkeit in die Zahnzwischenräume und verbleibender Putzfähigkeit auf den Zahnflanken erweist, wenn die genannte Abschrägung sich über etwa 25 % bis 75 % der Breite des Borstenbüschels an dessen Ende erstreckt. Mit "Breite" ist dabei die Erstreckung des Borstenbüschels senkrecht zu seiner Längsachse und quer zur Längsrichtung der Abschrägung gemeint.

Besonders wirkungsvoll sind die umfangsseitigen, längeren äußeren Borstenbüschel, insbesondere in Verbindung mit den genannten Abschrägungen, dann, wenn die genannten Borstenbüschel zumindest mit ihrer Außenseite gegenüber einer Senkrechten auf den Borstenträger spitzwinklig zur Außenumfangsseite hin geneigt sind, und zwar vorzugsweise unter einem Winkel im Bereich von 1,5° bis 15°, vorzugsweise etwa 3° bis 10°. Hierdurch erhalten die Borstenbüschel beim Hin- und Herbewegen des Bürstenkopfs in eine Richtung eine reduzierte Knicksteifigkeit, wodurch sich ein besseres Einschieben in die Zahnzwischenräume ergibt.

In vorteilhafter Weiterbildung der Erfindung besitzen die genannten längeren äußeren Borstenbüschel eine sich zu ihren freien Enden hin vergrößernde Querschnittsfläche und/oder vom Borstenträger weg auseinanderlaufende Seitenflanken. Insbesondere können die genannten umfangsseitig äußeren Borstenbüschel bei Betrachtung eines Längsschnitts trapezförmig ausgebildet sein, derart, dass die freien Enden des Büschels breiter als dessen Basis am Borstenträger ist. Durch eine derart trapezförmige Ausbildung der Borstenbüschel erhalten diese einerseits eine größere Arbeitsoberfläche an ihren freien Enden. Andererseits werden die Borsten innerhalb eines Büschels durch die fächerartige Aufspreizung leichter beweglich zueinander, wodurch sich insgesamt eine bessere Anpassung an die Zahnkontur und eine verbesserte Putzleistung ergibt. Insbesondere bei seitlichen Abschrägungen der freien Enden der Borstenbüschel erhalten diese günstige Geometrieverhältnisse mit spürbareren Kanten, die sich besser an die Übergangskonturen der Zähne anschmiegen.

Die trapezoide Ausbildung der äußeren, längeren Borstenbüschel ist hierbei vorteilhafterweise asymmetrisch bezüglich einer Senkrechten auf den Borstenträger ausgebildet. Insbesondere kann sich eine Innenflanke der genannten Borstenbüschel, die den inneren Borstenbüscheln zugewandt ist, im Wesentlichen senkrecht zur Oberfläche des Borstenträgers erstrecken, während eine Außenseite des jeweiligen Borstenbüschels, die den inneren Borstenbüscheln abgewandt ist, gegenüber einer senkrechten auf dem Borstenträger spitzwinklig zur Außenseite hin geneigt ist. Die äußeren Flanken stehen also schräg nach außen ab, während die inneren Flanken gerade stehen, das heißt im Wesentlichen senkrecht zur Borstenträgeroberfläche ausgerichtet sind.

Bei den länglich ausgebildeten Borstenbüscheln erstreckt sich die zuvor genannte Abschrägung am freien Ende des Borstenbüschels vorteilhafterweise parallel und/oder tangential zu der Längsachse der länglichen Stirnfläche des Borstenbüschels.

In vorteilhafter Weiterbildung der Erfindung sind außenumfangsseitig längere äußere Borstenbüschel auf gegenüberliegenden Umfangsseiten in einander gegenüberliegenden Umfangssektoren vorgesehen, so dass sich die zentrale Vertiefung in der Arbeitsfläche des Borstenfelds zwischen den gegenüberliegenden längeren Umfangsbüscheln erstreckt. Die längeren, äußeren Borstenbüschel sind hierbei vorteilhafterweise nicht entlang des gesamten Umfangs des Borstenfelds vorgesehen, sondern nur in begrenzten Winkelsektoren von vorzugsweise jeweils weniger als 60° Sektorwinkel, während sich in dazwischen liegenden Sektoren, in denen die rinnenförmig gewölbte Vertiefung im Zentralbereich ihre tiefsten Stellen besitzt, umfangsseitig keine längeren, erhöhten äußeren Büschel plaziert sind. Die rinnenförmige zentrale Vertiefung erstreckt sich sozusagen quer durch das gesamte Borstenfeld hindurch. Die äußeren, umfangsseitigen Borstenbüschel sind in den genannten Sektoren, in denen die rinnenförmige Vertiefung ihre tiefsten Stellen besitzt, an den Verlauf der rinnenförmigen Vertiefungskontur angepaßt bzw. bilden sie einen Teil hiervon.

Der Bürstenkopf ist grundsätzlich in verschiedener Art und Weise antreibbar. Je nach Ausbildung der Zahnbürste und deren Antrieb können verschiedene Antriebskinematiken realisiert sein. In vorteilhafter Weiterbildung der Erfindung umfasst die Antriebsbewegung hierbei eine rotatorische Oszillation um eine Rotationsachse, die sich durch den Borstenträger hindurch erstreckt. In einer vorteilhaften Ausführung der Erfindung kann sich die genannte Rotationsachse senkrecht zur Ebene des Borstenträgers durch dessen Mittelpunkt bzw. Schwerpunkt hindurch erstrecken.

Nach einer alternativen vorteilhaften Ausführung der Erfindung kann die Rotationsachse jedoch auch exzentrisch positioniert sein, so dass an verschiedenen Umfangsseiten des Borstenfelds verschieden große Bewegungskomponenten erzeugt werden. In vorteilhafter Weiterbildung der Erfindung ist dabei die Exzentrizität bezüglich der längeren, äußeren Borstenbüschel gegeben, das heißt die Rotationsachse ist parallel zu einer Verbindungslinie durch die gegenüberliegenden, äußeren, längeren Borstenbüschel verschoben. Je nach Konfiguration des Borstenfelds kann die Exzentrizität unterschiedlich stark ausgebildet sein, wobei es sich als guter Kompromiß zwischen erwünschtermaßen unterschiedlich großen Putzbewegungen an verschiedenen Umfangsseiten einerseits und immer noch erträglichen Rüttelbewegungen andererseits zeigt, wenn die Rotationsachse eine Durchmesserlinie des Borstenträgers im Längenverhältnis von 55% zu 45% bis 70% zu 30% unterteilt.

Alternativ oder zusätzlich kann die Drehachse des Borstenträgers zu der hiervon definierten Ebene spitzwinklig geneigt sein, wobei die Neigung vorzugsweise unter einem Winkel von 89° bis 65°, insbesondere 88° bis 82° zur Ebene des Borstenträgers beträgt. Hierdurch kann in Verbindung mit dem rinnenförmig gewölbten Oberflächenbild des Borstenfelds der Rotationsbewegung einer Stocherbewegung überlagert werden. Vorzugsweise ist die Drehachse dabei derart verkippt, dass das Borstenfeld vom Handstück der Zahnbürste weggekippt ist.

Bei rotatorisch oszillierendem Antreiben des Borstenfelds ist in vorteilhafter Weiterbildung der Erfindung vorgesehen, dass sich die in der Draufsicht längliche Stirnfläche der umfangsseitig äußeren, längeren Borstenbüschel in einem Bogen um die Rotationsachse herum, insbesondere auf einem Kreisbogen um die Rotationsachse herum erstreckt.

Die zuvor genannten Abschrägungen an den äußeren Enden der längeren äußeren Borstenbüschel können in Weiterbildung der Erfindung dennoch einen geraden Verlauf besitzen, vorzugsweise im Wesentlichen tangential zu der bogenförmig gekrümmten, länglichen Stirnfläche der Büschel. Hierdurch vereinfacht sich einerseits die Herstellung der Borstenbüschel. Andererseits ergibt sich eine in Umfangsrichtung variierende Breite der Abschrägungen sowie damit zusammenhängend der nicht abgeschrägten Stirnflächen, was nach Art von Keilflächen ein ständiges Eindringen und Herausziehen der entsprechenden Borstenbüschel aus den Zahnzwischenräumen bewirken kann.

Nach einer alternativen vorteilhaften Ausführung der Erfindung können die Abschrägungen jedoch ebenfalls einen bogenförmig um die Rotationsachse herum gekrümmten Verlauf besitzen, insbesondere derart, dass die Abschrägungen und/oder die verbleibenden, nicht abgeschrägten Stirnflächen der Borstenbüschel eine in Umfangsrichtung gleich bleibende Konturierung und Breite besitzen. Hierdurch kann ein besonders sanftes Kontaktieren der Borstenbüschel mit den Zahnflanken und günstiges Eindringen in die Zahnzwischenräume erzielt werden.

Die äußeren, längeren Borstenbüschel umgeben die inneren Borstenbüschel entlang etwa 25% bis 75% des Umfangs des Borstenfelds bzw. des Borstenträgers.

Die inneren Borstenbüschel, die die genannte zentrale Vertiefung in der Arbeitsfläche mit ihren freien Enden definieren, können mit ihren freien Enden eine im Wesentlichen durchgehende, kontinuierliche Oberfläche bilden, so dass sich eine tatsächlich durchgehende rinnenförmige Vertiefung ergibt. Hierdurch kann einerseits eine vollflächige Umschmiegung der Zahnflanken und damit eine flächige Putzwirkung erzielt werden. Andererseits wirkt sich dies günstig auf die Positionierung der Zahnpasta bzw. des Zahnreinigungsmittels aus, das besser auf der Arbeitsfläche des Borstenfelds gehalten wird und nicht so leicht zwischen den Borstenbüscheln hindurch auf den Borstenträger strömt.

In alternativer, vorteilhafter Weiterbildung der Erfindung können die genannten inneren Borstenbüschel mit ihren freien Enden separate Stirnflächen bilden, wodurch eine bessere Abfuhr von gelösten Verunreinigungen erzielt werden kann.

Um die Stechbewegungen auf das Zahnfleisch weiter abzumildern und ein besonders angenehmes Putzgefühl zu erzeugen, können die im Borstenfeld vorgesehenen Borsten, vorteilhafterweise nur ein Teil von ihnen, an ihren Enden aufgespleißt ausgebildet sein. Hierdurch erhalten die Borstenenden mehrer ausfransende, dünne Enden, die mit viel Fläche die Zahnflächen umschmiegen. Um dennoch eine ausreichende Putzleistung zu erzielen, sind vorteilhafterweise derartige aufgespleißte Borsten mit nicht spleißenden Borsten vermischt.

In Weiterbildung der Erfindung können die entsprechenden, d.h. die spleißenden Borsten dabei selbstaufspleißend ausgebildet sein derart, dass die beim normalen Putzen auf die Borsten einwirkenden Putzkräfte zu einem Aufspalten der Borste an deren freien Ende führt. Hierdurch können aufwändige Spleißverfahren und entsprechende Spleißmaschinen bei der Herstellung der Zahnürste eingespart werden.

Die spleißenden Borsten mit den seitlich vorspringenden Längsrippen werden hierbei vorteilhafterweise in entsprechenden Borstenbüscheln mit nicht selbstaufspleißenden Borsten zusammengefasst, so dass in dem entsprechenden Borstenbüschel eine Mischung aus aufspleißenden und nicht aufspleißenden Borsten vorliegt. Hierdurch können eine gute Umschmiegung der Zahnoberfläche, eine gute Putzmittelverteilung sowie ein angenehmes Putzgefühl mit dennoch hoher Putzleistung hinsichtlich Plaque-Entfernung kombiniert werden. Zudem kann eine hohe Borstendichte in einem Borstenbüschel und damit auf dem Borstenträger des Bürstenkopfs realisiert werden.

In besonders vorteilhafter Weise sind dabei die gemischten Borstenbüschel, die sowohl aufspleißende Borsten mit seitlichen Längsrippen als auch längsrippenfreie, normale Borsten aufweisen, in einem inneren Abschnitt des Borstenfelds des Bürstenkopfs angeordnet, während an einem äußeren Rand des Borstenfelds Borstenbüschel aus nicht aufspleißenden Borsten vorgesehen sind, wobei diese äußeren Borstenbüschel vorteilhafterweise eine größere Länge und/oder Höhe und/oder Durchmesser als die innenliegenden Borstenbüschel besitzen können, so dass mit diesen äußeren Borstenbüscheln aus nicht aufspleißenden Borsten eine besonders effektive Interdentalreinigung erzielt werden kann. Gleichzeitig stellen die aufspleißenden Borsten im inneren Bereich des Borstenfelds eine effektive Reinigung der Zahnflanken sicher.

In vorteilhafter Weiterbildung der Erfindung ist der Borstenkorpus einschließlich seines Kernabschnitts dabei frei von Sollbruchstellen ausgebildet, d.h. er besitzt vorteilhafterweise über den gesamten Querschnitt eine homogene Material- und Gefügestruktur.

Die selbstaufspleißende Ausbildung kann grundsätzlich auf verschiedene Art und Weise erzielt werden. In vorteilhafter Weiterbildung der Erfindung besitzen die Borsten eine spezielle Formgebung. Insbesondere kann der Borstenkorpus derart geformt sein, dass Längsrippen geeigneter Formgebung seitlich vorspringen, die sich dann an den Borstenenden unter Einwirkung der Putzkräfte aufspleissen.

Grundsätzlich kann der Borstenkorpus einer solchen Borste eine verschiedene Anzahl von Längsrippen aufweisen. In vorteilhafter Ausführung der Erfindung sind insbesondere drei oder vier Längsrippen vorgesehen.

Die Längsrippen des Borstenkorpus können hierbei grundsätzlich verschiedene Geometrien besitzen. Eine besonders vorteilhafte Ausführung der Erfindung besteht darin, dass der Querschnitt des Borstenkorpus in der Tat kleeblattförmig ist und/oder die Längsrippen eine Außenkontur besitzen, die jeweils einem Teilkreiszylinder entspricht.

Alternativ hierzu können die Längsrippen jedoch auch andere Außenkonturen besitzen. Beispielsweise können die Außenkonturen Teilzylinder mit einem dreieckförmigen Querschnitt, einem rechteckigen Querschnitt, einem rhombischen Querschnitt oder einem hexagonalen Querschnitt entsprechen.

Vorteilhafterweise besitzen hierbei alle Längsrippen eine zueinander identische Außenkontur, um ein gleichmäßiges Aufspleißen zu erzielen.

Die genannten Borsten mit Längsrippen können hierbei grundsätzlich in einem verschiedenen Mischungsverhältnis zu den aufspleißfreien, normalen Borsten zugegeben werden. Je nach Anwendungsfall können mehr aufspleißende Borsten, aber auch mehr nicht aufspleißende Borsten verwendet werden. Ein guter Kompromiss hinsichtlich Plaque-Enffernung einerseits und Umschmiegung der Zahnoberflächen und Putzmittelverteilung andererseits ist in Weiterbildung der Erfindung dadurch erreicht, dass 50% +/- 10% selbstaufspleißend ausgebildete Borsten mit seitlich vorspringenden Längsrippen einerseits und 50% +/- 10% aufspleißfreie, normale Borsten andererseits pro gemischtem Borstenbüschel verwendet werden.

Die aufspleißfreien Borsten können hierbei grundsätzlich verschiedene Querschnittsgeometrien besitzen. Vorteilhafterweise sind sie längsrippenfrei mit einer geometrischen Grundquerschnittsform wie beispielsweise rechteckig oder hexagonal ausgebildet. Insbesondere sind als aufspleißfreie Borsten solche mit rundem insbesondere kreisrundem Querschnitt vorgesehen.

Besonders vorteilhaft ist der Einsatz der genannten spleißenden Borsten in einem Borstenfeld, bei dem querschnittsflächenmäßig große Borstenbüschel am äußeren Rand des Borstenfelds und/oder in dessen Zentralbereich konzentriert und zwischen diese großflächigen Borstenbüscheln am Rand und im Zentrum auf einem mittleren Borstenbüschelring querschnittsflächenmäßig kleine Borstenbüschel vorgesehen sind. Insbesondere sind dabei innerhalb der länglichen Borstenbüschel auf dem äußeren Ring auf einem mittleren Ring mehrere Borstenbüschel mit einem Querschnitt kleiner als der Querschnitt der länglichen Borstenbüschel angeordnet und wiederum innerhalb dieser kleinen Borstenbüschel auf dem mittleren Ring ist zumindest ein Borstenbüschel mit einem Querschnitt größer als der Querschnitt der Borstenbüschel des mittleren Rings vorgesehen. Durch diese rhythmische Abwechslung der Büschelquerschnitte von innen nach außen lässt sich eine hohe Borstendichte erreichen und eine Kollision der Befestigungsmittel besser vermeiden. Zum anderen ergeben sich auch Vorteile hinsichtlich der Putzwirkung. Unter anderem wird die üblicherweise im Zentrum des Borstenfelds aufgebrachte Zahnpasta besser auf der Arbeitsfläche gehalten.

Vorteilhafterweise sind dabei die Borstenbüschel des genannten mittleren Rings sowie die innersten Borstenbüschel mit den genannten spleissenden Borsten versehen.

In Weiterbildung der Erfindung sind auf dem zumindest einen mittleren Borstenring Borstenbüschel unterschiedlicher Querschnittsformen angeordnet. Insbesondere können auf dem genannten zumindest einen mittleren Ring Borstenbüschel vorgesehen sein, die einen etwa quadratischen Büschelquerschnitt besitzen. Alternativ oder zusätzlich können auf dem genannten mittleren Ring auch Borstenbüschel mit einem runden Querschnitt, insbesondere kreisrunden Querschnitt vorgesehen sein. Sind sowohl eckige, insbesondere quadratische als auch runde, insbesondere kreisrunde Borstenbüschel auf dem genannten mittleren Ring angeordnet, sind diese vorteilhafterweise jeweils in verschiedenen Sektoren konzentriert. Hierfür bestehen grundsätzlich verschiedene Möglichkeiten. Nach einer vorteilhaften Ausführung der Erfindung ist vorgesehen, dass runde Borstenbüschel auf dem mittleren Ring in gegenüberliegenden Sektoren angeordnet sind, die in der unausgelenkten Neutralstellung des Borstenträgers die Zahnbürstenlängsachse enthalten. Die eckigen Borstenbüschel des mittleren Rings sind hingegen vorteilhafterweise in gegenüberliegenden Sektoren des Borstenträgers angeordnet, die in der Neutralstellung des Borstenträgers symmetrisch zu einer Querachse angeordnet sind.

Die Borstenbüschel des mittleren Rings besitzen ungeachtet ihrer verschiedenen Büschelquerschnittsformen zumindest näherungsweise etwa dieselbe Querschnittsfläche, wobei sich die Querschnittsflächen in einem Bereich von vorzugsweise weniger als +/-25% variieren.

Im Vergleich zu den Querschnittsflächen der Borstenbüschel des mittleren Rings sind die äußeren länglichen Borstenbüschel auf dem äußeren Ring und gemäß einer weiteren Ausführungsform auch das zumindest eine innerste Borstenbüschel im Zentrum des Borstenfelds hinsichtlich der Querschnittsfläche mindestens doppelt so groß.

Auf dem äußeren Ring des Borstenfelds können hierbei vorteilhafterweise mehrere jeweils einander gegenüberliegende Paare von länglichen Borstenbüscheln angeordnet sein. Um eine bessere Anpassung der Borstenkonfiguration an die unterschiedlichen Putzaufgaben in unterschiedlichen Bereichen des Borstenfelds zu erreichen, können hierbei auf dem genannten äußeren Ring verschieden ausgebildete Paare von länglichen Borstenbüscheln vorgesehen sein, die hinsichtlich ihrer Borstenlänge und/oder Höhe und/oder Querschnittsfläche unterschiedlich ausgebildet sind.

Hierbei sind grundsätzlich verschiedene Konfiguration möglich. Nach einer vorteilhaften Ausführung der Erfindung sind in gegenüberliegenden Sektoren des Borstenträgers, die in dessen unausgelenkter Neutralstellung die Zahnbürstenlängsachse enthalten, längere und/oder hinsichtlich der Querschnittsfläche größere längliche Borstenbüschel vorgesehen als in dazu senkrecht orientierten Sektoren quer zur Zahnbürstenlängsachse.

Zusätzlich zu den länglichen Borstenbüscheln können auf dem äußeren Ring vorteilhafterweise weitere Borstenbüschel mit nicht länglicher Kontur vorgesehen sein, die vorteilhafterweise einen näherungsweise runden oder quadratischen Querschnitt besitzen können, dessen Querschnittsfläche kleiner ist als die Querschnittsfläche der länglichen Borstenbüschel.

In dem Zentralbereich des Borstenfelds sind nach einer vorteilhaften Weiterbildung der Erfindung zwei ebenfalls längliche Borstenbüschel vorgesehen, deren Längsachse, d.h. die Längserstreckung des länglichen Querschnitts, jeweils parallel zu einer Hauptachse des Borstenträgers ausgerichtet sind. Insbesondere können die genannten innersten Borstenbüschel mit ihren Längsachsen in der unausgelenkten Neutralstellung des Borstenträgers parallel zur Zahnbürstenlängsachse orientiert sein und/oder auf die länglichen Borstenbüschel des äußeren Rings hin orientiert sein, die auf dem äußeren Ring die größte Höhe und/oder größte Querschnittsfläche besitzen.

Diese und weitere Merkmale der Erfindung, die jeweils auch für sich oder in Unterkombination unabhängig von ihrer Zusammenfassung in den Ansprüchen den Gegenstand der vorliegenden Erfindung bilden können, gehen außer aus den Ansprüchen auch aus der nachfolgenden Beschreibung und den zugehörigen Zeichnungen hervor, anhand derer bevorzugte Ausführungsformen der Erfindung näher erläutert werden. In den Zeichnungen zeigen:
- Figur 1:: eine schematische Seitenansicht einer elektrischen Zahnbürste mit einem rotato- risch antreibbaren Büstenkopf nach einer bevorzugten Ausführung der Erfin- dung,
- Figur 2:: eine Draufsicht auf den Bürstenkopf der Zahnbürste aus Figur 1,
- Figur 3:: einen Längsschnitt durch den Bürstenkopf aus Figur 2 entlang der Linie B-B pa- rallel zur Längsachse der Zahnbürste,
- Figur 4:: einen Längsschnitt durch den Bürstenkopf aus Figur 2 entlang der Linie A-A in Figur 2,
- Figur 5:: eine vergrößerte Seitenansicht eines der äußeren, längeren Borstenbüschel aus Figur 3 in einer vergrößerten, schematischen Darstellung, die die Winkelverhält- nisse der Abschrägung des Büschels zeigt,
- Fig. 6:: eine schematische Querschnittsansicht einer selbstaufspleißend ausgebildeten Borste nach einer vorteilhaften Ausführung der Erfindung mit drei seitlich vor- springenden Längsrippen,
- Fig. 7:: eine schematische Querschnittsansicht einer selbstaufspleißend ausgebildeten Borste nach einer weiteren vorteilhaften Ausführung der Erfindung mit vier seit- lich vorspringenden Längsrippen,
- Fig. 8:: eine ausschnittsweise, schematische Darstellung des Zahnbürstenkopfs der Zahnbürste aus den vorhergehenden Figuren, die die Verkippung des Borsten- trägers sowie die gegenläufige Neigung der Arbeitsfläche des Borstenfelds zeigt, wobei der Bürstenkopf im Putzeinsatz auf einen Zahn aufgesetzt dargestellt ist,
- Fig. 9:: eine schematische Darstellung der sich ergebenden Geschwindigkeits- bzw. Kinematikverhältnisse bei der Stocherbewegung einer Borste, wobei in der Teil- darstellung (a) eine senkrecht auf die Zahnoberfläche stehende Borste darge- stellt ist, während in der Teildarstellung (b) eine durch Verkippung des Borsten- trägers schräg gestellte Borste dargestellt ist,
- Fig. 10:: eine schematische Darstellung der Ausweichbewegung einer Borste bei Aufset- zen auf eine Zahnoberfläche, wobei die Teilansichten (a) und (b) den Fall einer senkrecht auf die Zahnoberfläche angestellten Borste zeigen, während die Teil- ansichten (c) und (d) eine erfindungsgemäß schräg gestellte Borste zeigen, bei der sich anstelle des Knickstabfalls ein Wegbiegen der Borste einstellt,
- Fig. 11:: eine schematische Darstellung der Putzwirkung einer Borste im gebogenen Zu- stand, wobei die Teilansicht (a) die Putzwirkung einer nicht stochernd angetrie- benen Borste zeigt, während die Teilansicht (b) die Putzwirkung einer stochernd angetriebenen Borste zeigt, und
- Fig. 12: eine ausschnittsweise, schematische Darstellung des Zahnbürstenkopfs der Zahnbürste ähnlich Figur 8 nach einer weiteren Ausführung der Erfindung, die die Verkippung des Borstenträgers zeigt, wobei die Rotationsachse gegenüber der Borstenfeldhauptachse gemäß Teilansicht 12a exzentrisch und gemäß Teil- ansicht 12b verkippt angeordnet ist.

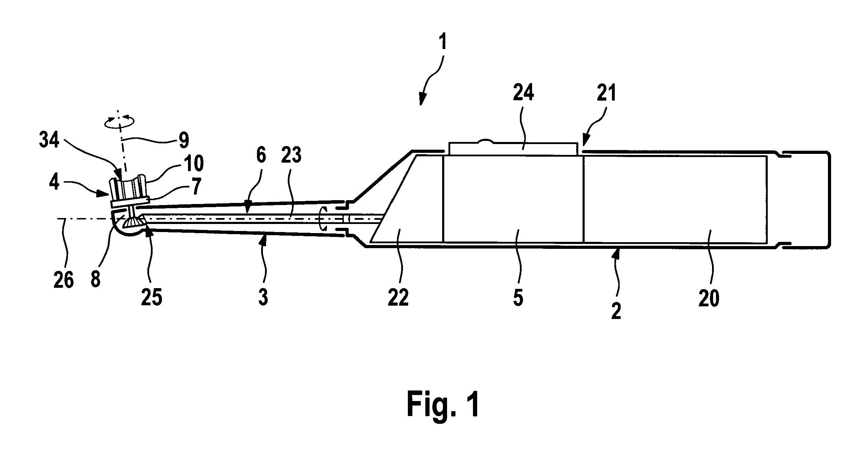

Die in Figur 1 gezeichnete Zahnbürste 1 umfasst einen Handteil 2 sowie einen daran ankuppelbaren Bürstenkopf 4. Genauer gesagt ist der Bürstenkopf 4 an einen mit dem Handteil 2 verbundenen Hals 3 der Zahnbürste 1 durch vorzugsweise formschlüssige Verbindungsmittel ankuppelbar, der in Form eines hohlen Bürstenrohrs ausgebildet ist. Es wäre jedoch ebenfalls möglich, dass der Bürstenkopf 4 den genannten Hals 3 bzw. zumindest einen Teil hiervon umfasst und mit diesem an den Handteil 2 ankuppelbar ist.

Der Handteil 2 nimmt in seinem Inneren einen Energiespeicher 20, vorzugsweise in Form eines Akkus, einen Motor 5, vorzugsweise in Form eines Elektromotors, sowie eine Steuereinrichtung 21 auf.

Die Drehbewegung des Motors 5 wird über ein Getriebe 22 in der gezeichneten Ausführung in eine rotatorisch oszillierende Bewegung einer Antriebswelle 23 umgesetzt, die sich durch den Hals 3 hindurch zum Bürstenkopf 4 hin erstreckt. Über einen am Handteil 2 angebrachten Schalter 24 kann die Zahnbürste 1 aktiviert bzw. abgeschaltet werden.

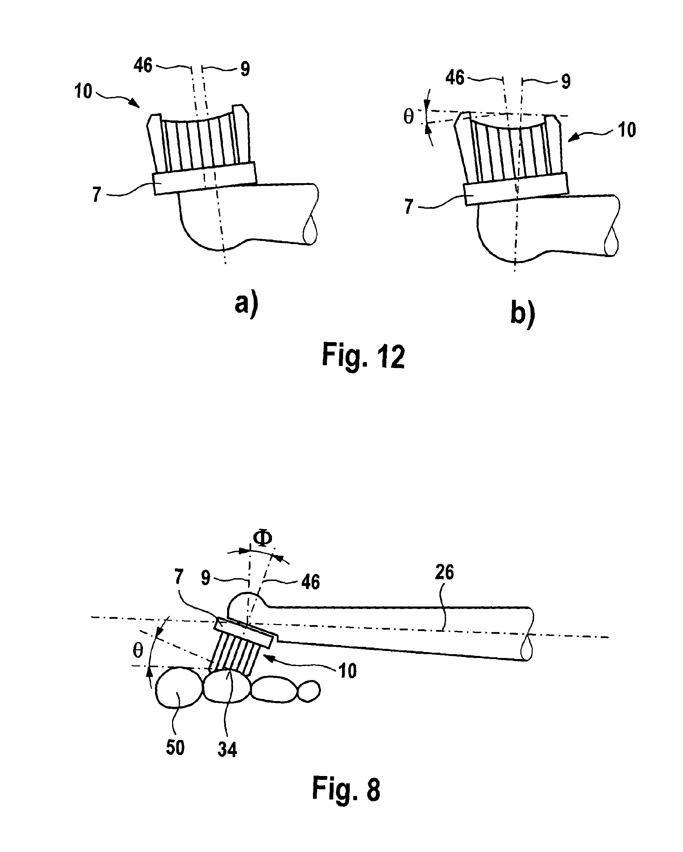

Der Bürstenkopf 4 wird in bekannter Art und Weise mittels eines geeigneten Getriebes bevorzugt (abweichend zu der gezeichneten Ausführungsform über eine Kegelradstufe 25) mittels eines Schubstangengetriebes am Ende der Antriebswelle 23 in eine oszillierende Rotationsbewegung um eine Rotationsachse 9 versetzt, die sich im Wesentlichen quer zur Zahnbürstenlängsachse 26 erstreckt. Der dabei vom Borstenträger 7 des Bürstenkopfs 4 überstrichene Winkelbereich nimmt vorteilhafterweise einen Wert im Bereich von etwa ± 35° ± 5° an, wobei jedoch auch eine Oszillation im Bereich von ± 10° bis ± 100° möglich ist. Die Oszillationsfrequenz kann variieren und beispielhaft zwischen 10 Hz und 100 Hz liegen. In der Figur 1 gezeichneten Ausführung bildet die Rotationsachse 9 mit der Zahnbürstenlängsachse 26 einen rechten Winkel. Zusätzlich ist ein Antrieb des Bürstenkopfes 4 in einer dritten Dimension für dessen Pulsation im wesentlichen (je nach dem ob durch zusätzliche Verkippungen des Bürstenkopfes ggf. je nach Schwenklage weitere räumliche Bewegungskomponenten hinzukommen) in Richtung der Rotations- bzw. Oszillationsachse 46 oder in Richtung der Borstenerstreckung vorgesehen. Die Stocherachse 48 ist in einem Sonderfall somit identisch mit der Oszillationsachse 46 und in anderen Fällen zu dieser (spitzwinklig) geneigt oder etwa senkrecht zur Zahnbürstenlängsachse 26 angeordnet. In jedem Fall wird der Bürstenkopf zusätzlich somit stochernd zum Zahn hin angetrieben. In der Figur 1 gezeichneten Ausführung bildet die Rotationsachse 9 mit der Zahnbürstenlängsachse 26 einen stumpfen Winkel, da der Bürstenkopf vom Handteil 2 weg verkippt angeordnet ist, wie weiter unten unter Bezugnahme auf Figur 8 noch erläutert wird.

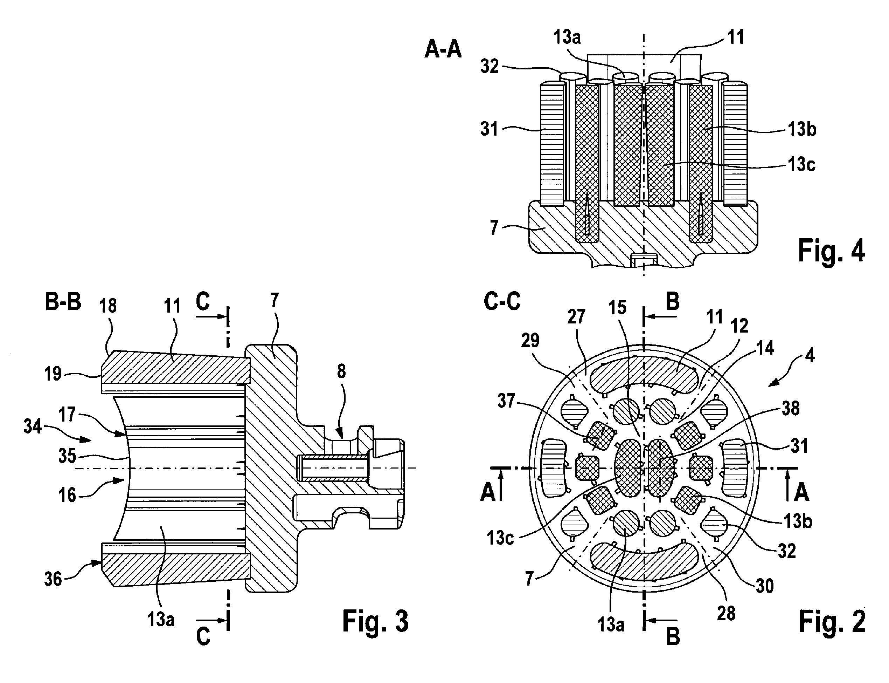

Eine bevorzugte Ausführungsform des Bürstenkopfs 4 der Zahnbürste 1 ist in den Figuren 2 bis 5 dargestellt. Der Borstenträger 7 ist hierbei rund, jedoch vorteilhafterweise nicht kreisrund, sondern leicht oval und/oder elliptisch ausgebildet, wobei die längere Achse des Ovals bzw. der Ellipse in der Neutralstellung des Borstenträgers 7 parallel zur Zahnbürstenlängsachse 26 und die kürzere Achse des Ovals bzw. der Ellipse quer hierzu verläuft. In Figur 2 ist die längere Achse des Ovals bzw. der Ellipse parallel zu der Linie B-B.

Auf dem Borstenträger 7 sind hierbei eine Vielzahl von Borstenbüscheln angeordnet, die in mehreren Ringen 12, 14 und 15 angeordnet und über das Borstenfeld 10 verteilt sind. Auf einem äußeren Ring 12 sind dabei in der gezeichneten Ausführung nach Figur 2 acht Borstenbüschel positioniert, von denen vier eine langgestreckte Kontur besitzen, während vier eine - grob gesprochen - runde bzw. gleichseitige Querschnittskontur besitzen. Die Länge der Borstenbüschel auf dem genannten äußeren Ring 12 variiert hierbei, wie noch näher erläutert wird, wobei - grob gesprochen - generell in gegenüberliegenden Sektoren 27 und 28, die in der Ausgangsstellung des Borstenträgers 7 die Zahnbürstenlängsachse 26 enthalten, längere Borstenbüschel vorgesehen sind als in hierzu quer orientierten bzw. dazwischen liegenden Sektoren 29 und 30, vgl. Figur 2.

Wie Figur 2 zeigt, sind die auf den Hauptachsen B-B bzw. A-A liegenden Borstenbüschel 11 bzw. 31 des äußeren Rings 12 in der Draufsicht jeweils länglich ausgebildet, während die dazwischen liegenden Borstenbüschel 32 eine näherungsweise gleichseitige Konturierung bzw. eine näherungsweise kubischen bzw. runden Querschnitt besitzen. Die genannten länglichen Borstenbüschel 11 bzw. 31 besitzen dabei jeweils einen bogenförmig gekrümmten Verlauf um die Rotationsachse 9 herum, vgl. Figur 2.

Die auf der längeren Hauptachse B-B sitzenden äußeren Borstenbüschel 11 erstrecken sich dabei über einen Umfangsabschnitt von etwa 50° bis 90°, vorzugsweise etwa 70°, während sich die auf der kürzeren Hauptachse A-A sitzenden äußeren Borstenbüschel 31 über einen Umfangsabschnitt von jeweils etwa 20° bis 45°, vorzugsweise etwa 30° erstrecken.

Auf einem von außen her betrachtet zweiten Ring 15 von Borstenbüscheln sind insgesamt 10 Borstenbüschel 13a und 13b positioniert, von denen einige einen kreisrunden Querschnitt und andere einen eckigen Querschnitt besitzen. Insbesondere sind, wie Figur 2 zeigt, in den Sektoren 27 und 28, in denen die längeren äußeren Büschel 11 des äußeren Rings 12 liegen, im Querschnitt kreisrunde Borstenbüschel 13a angeordnet, während in den dazwischen liegenden Sektoren 29 und 30 des Borstenträgers 7 auf dem zweiten Ring 14 eckige Borstenbüschel vorgesehen sind. Auch die Länge dieser Borstenbüschel 13a und 13b auf dem zweiten Ring 14 variiert von Büschel zu Büschel entlang dem Umfang des Rings 14 zyklisch, und zwar derart, dass in den genannten Sektoren 27 und 28 längere Borstenbüschel vorgesehen sind als in den auf der kurzen Hauptachse liegenden Sektoren 29 und 30.

Die runden Borstenbüschel 13a sowie die eckigen, etwa quadratischen Borstenbüschel 13b des mittleren Rings 14 besitzen ungeachtet ihrer unterschiedlichen Querschnittskontur näherungsweise zumidest etwa dieselbe Querschnittsfläche.

Wie Figur 2 zeigt, kann, um günstige Platzverhältnisse für die Befestigung der Borstenbüschel zu schaffen, kann in Weiterbildung der Erfindung vorgesehen sein, dass die eckigen Borstenbüschel 13b des mittleren Rings 14, zumindest einige hiervon, gegenüber den Hauptachsen A-A und B-B des Borstenträgers 7 und auch gegenüber der Ringkontur des Rings 14, auf dem sie angeordnet sind, spitzwinklig verdreht sind. Insbesondere kann zumindest eines der eckigen Borstenbürschel, vorzugsweise jedes zweite eckige Borstenbüschel 13b mit seiner Hauptachse 37 derart verdreht sein, dass die Hauptachse 37 des Borstenbüschelquerschnitts spitzwinklig zu einer Tangentialen an den mittleren Ring 14 geneigt ist. Hierdurch werden entsprechende Ankerplättchen entsprechend aus dem Kollisionsbereich anderer Ankerplättchen herausgedreht. Zudem kann das Biegeverhalten des Borstenfelds insgesamt homogener und insbesondere weniger richtungsabhängig ausgebildet werden.

Schließlich sind in einem ganz inneren Bereich bzw. einem von außen her betrachtet dritten Ring von Büscheln zwei längliche Borstenbüschel 13c vorgesehen, die sich mit ihrer Längserstreckung 38 jeweils parallel zur längeren Hauptachse B-B erstrecken.

Die innersten Borstenbüschel 13c sind dabei hinsichtlich ihrer Querschnittfläche deutlich größer als die Borstenbüschel 13 a und 13b des mittleren Rings. In der gezeichneten Ausführung beträgt ihre Querschnittfläche zwischen 200% und 400% der Querschnittsfläche der Borstenbüschel 13 a und 13b des mittleren Rings 14.

Die innersten Borstenbüschel 13c sind dabei länglich ausgebildet, so daß Ihre Längserstreckung 38 mehr als 150% ihrer Quererstreckung, vorzugsweise etwa 150% bis 300% beträgt. In der gezeichneten Ausführung sind die innersten Borstenbüschel 13c vorteilhafterweise an einer Außenkontur bauchig gewölbt und an einer Innenkontur gerade ausgebildet, wobei die Innen- und Außenkonturen vorteilhafterweise durch gerundete Stirnkonturen verbunden sind.

Die innersten Borstenbüschel 13c sind dabei vorteilhafterweise mit ihren Längsachsen 38 parallel zur Hauptachse des Borstenträgers ausgerichtet, die sich in der unausgelenkten Neutralstellung des Borstenträgers 7 parallel zur Zahnbürstenlängsachse 26 bzw, einer hierdurch gehenden Längsmittelebene erstreckt.

Wie Figur 3 zeigt, sind die Borstenbüschel des Borstenfelds 10 an ihren freien Enden derart konturiert bzw. hinsichtlich ihrer Länge und/oder Höhe derart aufeinander abgestimmt, dass die von den freien Enden der Borstenbüschel definierte Arbeitsfläche 34 des Borstenfelds 10 eine zentrale Vertiefung 16 besitzt, die einen rinnenförmigen Boden 17 besitzt, der in einer Richtung einen gewölbten Verlauf und in einer dazu senkrechten Richtung einen geraden Verlauf besitzt. Die Wölbung erstreckt sich dabei vorteilhafterweise in Richtung der längeren Hauptachse B-B bzw. in Richtung der Zahnbürstenlängsachse 26, wenn der Borstenträger 7 in seiner unausgelenkten Neutralstellung ist. In einer hierzu senkrechten Richtung, die parallel zur kürzeren Hauptachse A-A des Borstenträgers 7 und/oder quer zur Zahnbürstenlängsachse 26 verläuft, wenn der Borstenträger 7 in seiner unausgelenkten Neutralstellung ist, besitzt die Vertiefung 16 eine gerade Konturierung, wie dies Figur 3 zeigt.

Die zentrale Vertiefung 16 kann dabei unterschiedliche tief ausgebildet sein. In vorteilhafter Weiterbildung der Erfindung ist der tiefste Punkt der Vertiefung 16 um einen Betrag von etwa 1 mm bis 3 mm, vorzugsweise etwa 2 mm gegenüber dem höchsten Punkt des Borstenfelds 10 tiefer gesetzt. Die rinnenförmige Konturierung des Bodens 17 der Vertiefung 16 kann hierbei grundsätzlich unterschiedlich gewölbt sein. Bei der in den Figuren 3 bis 5 gezeigten Ausführung ist eine kreisbogenförmige Konturierung mit einem Krümmungsradius im Bereich von 8 mm bis 17 mm, vorzugsweise etwa 11 mm bis 14 mm vorgesehen, wobei dies jedoch je nach Dimensionierung und Konfigurierung des Borstenfelds variieren kann.

Wie Figur 3 zeigt, sind hierbei die Stirnflächen der inneren Büschel 13a, 13b und 13c sowie die Stirnflächen der kürzeren, äußeren Büschel 31, die ebenfalls den rinnenförmigen Boden 17 mit definieren, nicht als ebene Flächen ausgebildet, sondern ebenfalls in sich rinnenförmig gewölbt. Die jeweils rinnenförmig gewölbten Stirnflächen 35 ergänzen hierbei einander und bilden zusammen die genannte rinnenförmige Kontur des Bodens 17 der zentralen Vertiefung 16. Konkret nimmt die Neigung der Stirnflächen der inneren Borstenbüschel 13 mit zunehmenden Abstand von der Rotationsachse 9 in Richtung parallel zur Hauptachse B-B zu, vgl. Figur 3. Mit anderen Worten: die auf der hierzu quer verlaufenden Hauptachse A-A angeordneten Borstenbüschel sind an ihren freien Enden zwar leicht gewölbt, jedoch im Wesentlichen parallel zur Borstenträgeroberfläche ausgerichtet, während mit zunehmenden Abstand von der genannten Hauptachse A-A die Neigung der freien Enden zunimmt.

Wie Figur 3 ebenfalls zeigt, sind die in den Sektoren 27 und 28 angeordneten äußeren Büschel 11 des äußeren Rings 12 gegenüber den restlichen Borstenbüscheln verlängert bzw. besitzen sie eine größere Höhe, so dass sie über die restlichen Borstenbüschel vorspringen. Hierbei ergibt sich auch eine Höhenstufe gegenüber der zentralen Vertiefung 16, vgl. Figur 3, das heißt die zentrale Vertiefung 16 geht bei der in Figur 3 gezeichneten Ausführung nicht kontinuierlich in die Stirnflächen der genannten äußeren Büschel 11 über.

Die genannten äußeren Büschel 11 in den gegenüberliegenden Sektoren 27 und 28, die in der Neutralstellung des Borstenträgers die Zahnbürstenlängsachse 26 enthalten, besitzen vorteilhafterweise Stirnflächen 36, die einen Flachabschnitt 19 umfassen, der im Wesentlichen senkrecht zur Längsachse der Borstenbüschel 11 ausgerichtet ist sowie Abschrägungen 18, die die genannten Stirnflächen 36 zur Außenseite hin abschrägen.

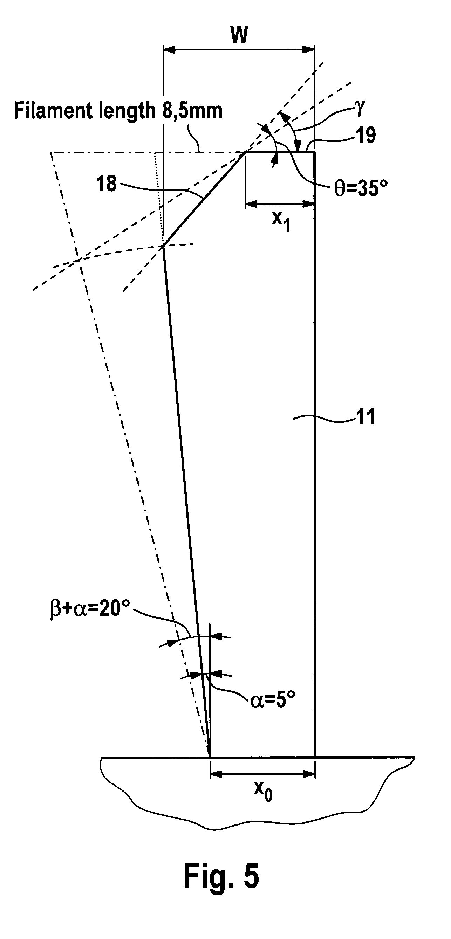

Wie Figur 5 zeigt, erstrecken sich hierbei die genannten Abschrägungen 18 unter einem Winkel ? im Bereich von 20° bis 60°, vorzugsweise etwa 30° bis 40°. Die Abschrägungen 18 sind hierbei vorteilhafterweise so tief bzw. breit ausgebildet, dass sie sich etwa über 25 % bis 75 % der Breite W des jeweiligen Borstenbüschels 11 erstrecken. Die Breite W meint hierbei die Erstreckung des Borstenbüschels senkrecht zu dessen Längsachse sowie senkrecht zur Längserstreckung der Abschrägung 18, und zwar im Bereich des freien Endes des Borstenbüschels, vgl. Figur 5. In der in Figur 5 gezeichneten Ausführung erstreckt sich also die Abschrägung über etwa 1/4 bis 3/4 der Breite W.

Die genannten längeren äußeren Borstenbüschel 11 sind hierbei in ihrem Längsschnitt betrachtet insgesamt trapezförmig ausgebildet. Während sich die innenliegende Flanke des jeweiligen Borstenbüschels 11 im Wesentlichen senkrecht zu der vom Borstenträger 7 definierten Ebene erstreckt, ist die außen liegende Flanke zu einer Senkrechten auf den Borstenträger 7 unter einem Winkel a von etwa 1,5° bis 10°, vorzugsweise etwa 3° bis 5° geneigt, so dass sich der Querschnitt des Borstenbüschels 11 zu seinem freien Ende hin vergrößert, das heißt der Borstenbüschel wird zum freien Ende hin breiter. Hierdurch kann bei begrenzter Größe des Borstenträgers 7 eine große Arbeitsfläche erzielt werden. Überdies ergeben sich günstige Geometrieverhältnisse am freien Ende des Borstenbüschels 11 in Bezug auf dessen Abschrägung 18.

Um die Zahnflanken möglichst flächig zu umschmiegen, den Putzdruck großflächig zu verteilen und Zahnpasta oder dergleichen auf der Arbeitsfläche 34 zu halten, nehmen die Borstenbüschel mit ihren freien Enden vorteilhafterweise zumindest 35 % bis 55 % des vom Borstenträger 7 definierten Fläche ein, vorzugsweise 50 % oder mehr hiervon. Wie Figur 2 zeigt, können die Borstenbüschel auf dem äußeren Ring 12 sich über einen Umfangsabschnitt von etwa 200° bis 300° erstrecken, wenn die Erstreckung aller Borstenbüschel zusammengerechnet wird. Der von außen betrachtet zweite Ring 14 von Borstenbüschel kann sich über einen Umfang von insgesamt etwa ebenfalls 200° bis 300° erstrecken, wenn die Erstreckung aller Borstenbüschel entlang des Umfangs zusammengerechnet wird. Die innersten Borstenbüschel können mit ihren freien Enden vorteilhafterweise eine im Wesentlichen vollflächig geschlossene Fläche bedecken.

Vorteilhafterweise sind dabei die die zentrale Vertiefung 16 definierenden Borstenbüschel zumindest teilweise mit selbstaufspleißend ausgebildeten Borsten versehen, wobei insbesondere die in Fig. 2 gezeigten Borstenbüschel 13a und 13b des mittleren Rings 14 und/oder die innersten Borstenbüschel 13c solche selbstaufspleißenden Borsten umfassen können.

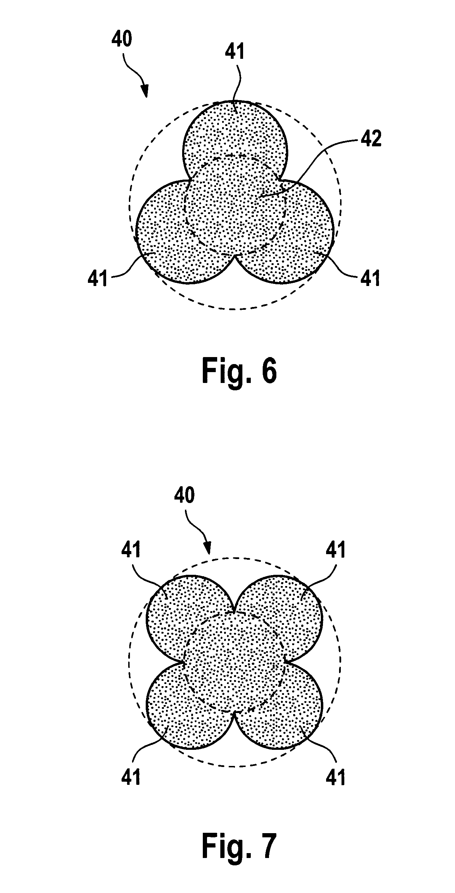

Fig. 6 zeigt hierbei eine bevorzugte Ausführung einer solchen selbstaufspleißend ausgebildeten Borste, die einen über ihre Länge grundsätzlich gleich bleibenden Querschnitt besitzt, der vorteilhafterweise kleeblattförmig ausgebildet ist, wie dies Fig. 6 zeigt. Der Borstenkorpus 40 umfasst hierbei drei seitlich vorspringende Längsrippen 41, die von einem Kernabschnitt 42 sternförmig zur Außenumfangsseite hin vorspringen. Die Längsrippen 41 sind hierbei gleichmäßig über den Umfang verteilt. Die Längsrippen 41 besitzen hierbei vorteilhafterweise eine Außenkontur, die einem Abschnitt etwa eines Kreiszylinders oder eines anderen abgerundeten Körpers entspricht.

Eine andere Ausführung der Borste zeigt Fig. 7. Die Grundkonzeption entspricht im Wesentlichen der Fig. 6, so dass entsprechende Bezugsziffern verwendet sind. Im Wesentlichen unterscheidet sich Fig. 7 von Fig. 6 dadurch, dass anstelle von drei Längsrippen 41 vier Längsrippen 41 vorgesehen sind und damit also der Borstenkorpus 40 den Querschnitt eines vierblättrigen Kleeblatts besitzt. Auch hier sind die Längsrippen 41 gleichmäßig über den Umfang verteilt und mit einer Außenkontur versehen, die einem Teilkreiszylinder entspricht.

Vorteilhafterweise sind die in den Figuren 6 und 7 gezeigten spleißend ausgebildeten Borsten teilweise in den zuvor genannten Borstenbüscheln des mittleren Rings 14 bzw. die innersten Borstenbüschel 13c mit "normalen", d.h. nicht spleißend ausgebildeten Borsten kombiniert, und zwar vorteilhafterweise in einem Mischungsverhältnis von etwa 50 +/- 10% zu 50 +/- 10%.

Wie Fig. 8 am besten verdeutlicht, ist der Borstenträger 7 zur Zahnbürstenlängsachse in spezieller Weise verkippt und das Borstenfeld 10, genauer gesagt dessen Arbeitsfläche 34 (die hier in Kontakt mit Zähnen dargestellt ist) mit einer gegenläufigen Schrägstellung versehen.

Der Borstenträger 7 ist gegenüber der Zahnbürstenlängsachse 26, die im montierten Zustand des Bürstenkopfs 4 mit dessen Bürstenkopflängsachse zusammenfällt, vom Zahnbürstenhandteil 2 weg verkippt, so dass die Borstenfeldhauptachse 46 zu einer Senkrechten auf die Zahnbürstenlängsachse 26 unter einem Neigungswinkel F von vorzugsweise etwa 8° +/- 3° geneigt, so dass das Borstenfeld 10 mit seiner Hauptachse 46 vom Zahnbürstenhandteil 2 "wegschaut".

Zum anderen ist die Arbeitsfläche 34 des Borstenfelds 10, die von den freien Enden der Borsten gebildet wird, schräg angestellt, d.h. sie verläuft nicht parallel zur Oberfläche des Borstenträgers 7, und zwar vorteilhafterweise derart, dass die genannte Neigung gegenläufig zur Verkippung des Borstenträgers ist. Der Neigungswinkel ? der genannten Arbeitsfläche 34 zur Senkrechten auf die Borstenfeldhauptachse 46 beträgt dabei vorteilhafterweise etwa 3,5° +/- 1°. Da die genannte Arbeitsfläche 34 nicht eben ausgebildet ist, sondern in der vorgenannten Weise eine rinnenförmig gewölbte Vertiefung aufweist und die randseitigen Borstenbüschel vorspringen, meint die genannte Neigung dabei die Neigung einer näherungsweise über die Arbeitsfläche gelegten Ebene, die beispielsweise durch die höchsten Punkte der Arbeitsfläche und/oder durch statistische Mittelung der abschnittsweisen Neigungen bestimmt sein kann.

Wie Fig. 8 zeigt, kann durch das Verkippen der Borstenfeldhauptachse 46 um den Winkel F sowie die gegenläufige Neigung ? der Arbeitsfläche 34 einerseits eine Schrägstellung der Borstenbüschel zur zu bearbeitenden Zahnoberfläche erreicht und damit der Knickstabfall weitgehend vermieden werden, während andererseits die konkave Kontur des Borstenfelds 10 bzw. von dessen Arbeitsfläche 34 passend auf der Zahnoberfläche sitzt, wodurch sich die Bürste von selbst zentriert.

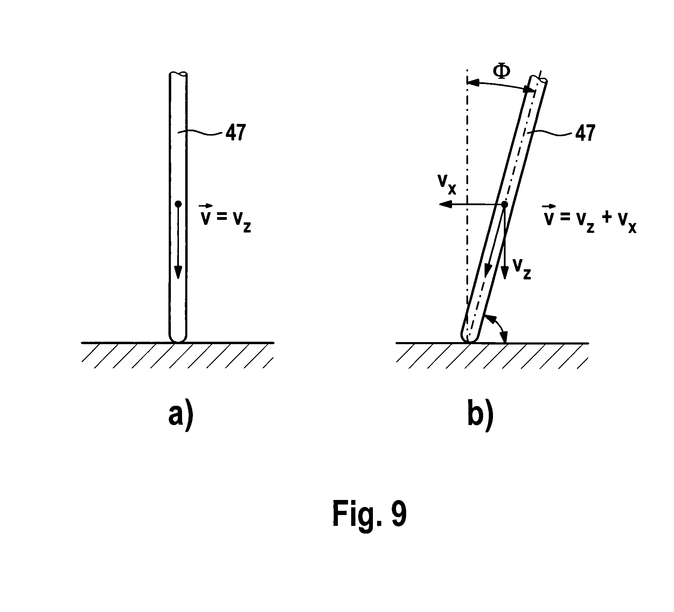

Fig. 9 verdeutlicht hierbei die sich ergebenden Geschwindigkeits- bzw. Kinematikverhältnisse. Während Fig. (a) eine senkrecht stehende Borste zeigt, bei der bei einer Stocherbewegung der Geschwindigkeitsvektor der Stocherbewegung exakt in Längsrichtung der Borste verläuft, zeigt die Teildarstellung (b) eine schräg angestellte Borste, bei der die Stocherbewegung eine senkrechte Komponente zur Zahnoberfläche und eine hierzu, d.h. zur Zahnoberfläche parallele Komponente besitzt. Hierdurch werden entsprechende Reaktionskräfte erzeugt. Während beim senkrechten Fall gemäß Fig. 9 (a) die von der Stocherbewegung erzeugten Reaktionskräfte senkrecht in Längsrichtung der Borste in diese eingeleitet werden, wird beim schräg gestellten Fall gemäß Fig. 9 (b) eine Komponente der Reaktionskraft etwa quer zur Borstenlängsachse eingeleitet.

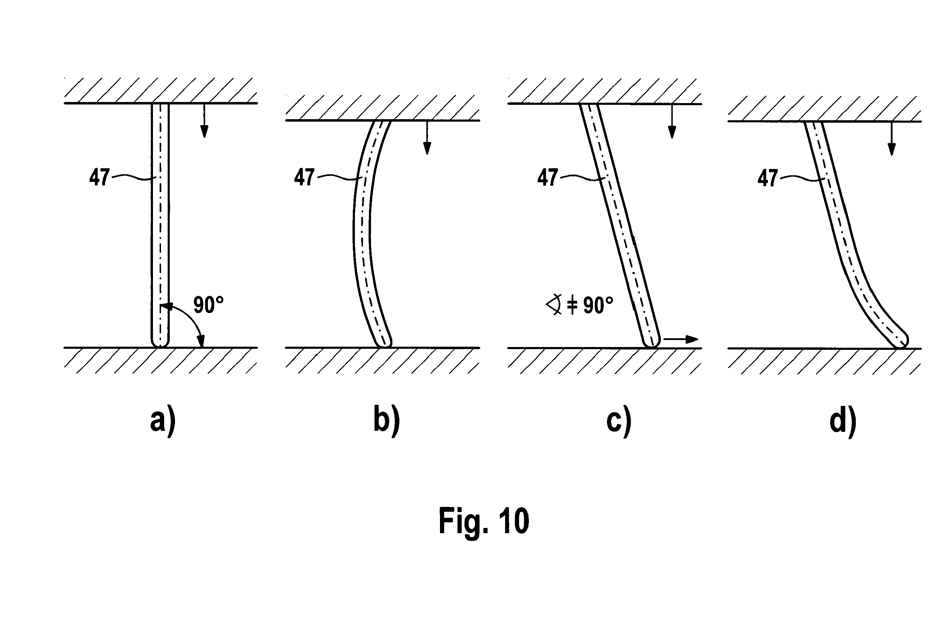

Hierdurch ergeben sich die in Fig. 10 gezeigten, unterschiedlichen Knick- bzw. Biegefälle der Borste. Bei senkrecht stehenden Borsten gemäß Figuren 10 (a) und 10 (b) kommt es zu einem knickstabähnlichen Ausbauchen der Borste, während bei einer schräg gestellten Borste gemäß den Teilansichten 10 (c) und 10 (d) eine sanfte Biegung der Borste von ihrem freien Ende her eintritt, wodurch die Reaktionskraft deutlich kleiner und damit das Putzgefühl deutlich sanfter wird.

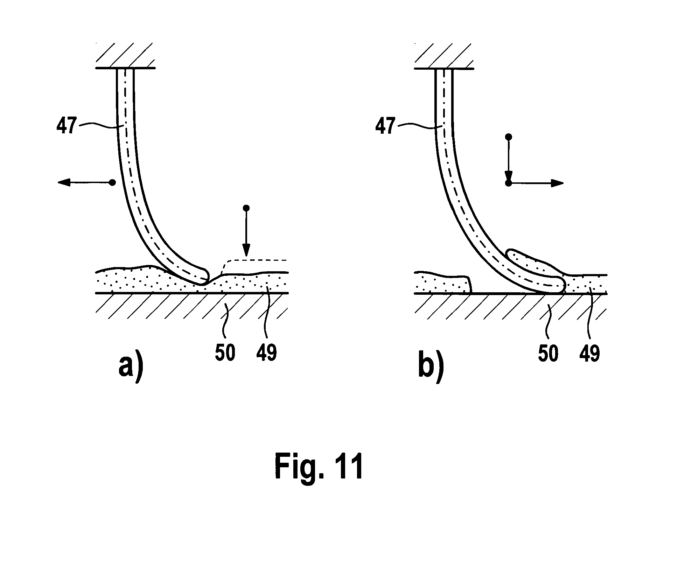

Die in Figur 11b dargestellte oszillierend - schwenkende und stochernd angetriebene geneigte Borste 47 trägt die Plaque 49 des Zahnes 50 effizienter ab, als die in Figur 11a schematisch dargestellte Borste 47, die nur oszillierend -schwenkend angetrieben und geneigt ist.

Wie Fig. 12 zeigt, kann die Oszillations- bzw. Rotationsachse 9 gegenüber der Borstenfeldhauptachse 46 auch exzentrische und/oder spitzwinklig verkippt angeordnet sein. Gemäß Fig. 12a kann hierbei eine Exzentrizität vorzugsweise in Richtung der Längserstreckung des ovalen Borstenträgers 7, wenn sich dieser in seiner unausgelenkten Neutralstellung befindet, bzw. in Richtung der Zahnbürstenlängsrichtung vorgesehen sein, wobei die Exzentrizität bezogen auf den größten Durchmesser der Borstenträgers 7 vorzugsweise nicht mehr als 25 %, insbesondere etwa 5% bis 15% beträgt. Hierdurch wird einerseits im Zentrum des Bortenfelds eine stärkere Relativbewegung zwischen Borstenfeld und Zahn und damit dort eine bessere Putzwirkung erzielt, während andererseits die Selbstzentrierwirkung noch erhalten bleibt. Gemäß Fig. 12b kann auch eine Verkippung der Rotationsachse 9 gegenüber der Borstenfeldhauptachse erfolgen, vorzugsweise im Bereich von 5° bis 15°, wodurch eine stärkere räumliche Komponente der Antriebsbewegung erzielt werden kann. Vorzugsweise hat die räumliche Bewegungskomponente die gleiche Frequenz wie die der Oszillations-/Rotationsbewegungskomponente (da alle Bewegungen gekoppelt sind).

## Patentansprüche

1. Bürstenkopf für eine elektrische Zahnbürste, mit einem vorzugsweise plattenförmigen Borstenträger (7), der ein Borstenfeld (10) trägt, das eine vorzugsweise senkrecht zum Borstenträger (7) stehende Borstenfeldhauptachse (46) besitzt, Antriebs- und/oder Übertragermittel zum räumlich mehrdimensionalen Antreiben des Borstenträgers (7) rotatorisch oszillierend um eine Rotationsachse (9) sowie stochernd hin- und hergehend entlang einer Stocherachse (48), sowie Verbindungsmitteln zum Verbinden des Borstenträgers (7) mit einem Zahnbürstenhandteil (2), wobei im verbundenen Zustand sich eine Bürstenkopflängsachse etwa parallel zu einer Zahnbürstenlängsachse (26) erstreckt, **dadurch gekennzeichnet, dass** der Borstenträger (7) und/oder das Borstenfeld (10) mit seiner Borstenfeldhauptachse (46) zur Bürstenkopflängsachse verkippt angeordnet ist derart, dass die Borstenfeldhauptachse (46) zu einer Senkrechten auf die Bürstenkopflängsachse unter einem spitzen Neigungswinkel F geneigt ist.

2. Bürstenkopf nach dem vorhergehenden Anspruch, wobei die Borstenfeldhauptachse (46) zur Senkrechten auf die Bürstenkopflängsachse unter dem Winkel F im Bereich von 2,5° bis 25°, vorzugsweise 3° bis 17° geneigt ist.

3. Bürstenkopf nach dem vorhergehenden Anspruch, wobei der Neigungswinkel F der Borstenfeldhauptachse (46) zur Senkrechten auf die Bürstenkopflängsachse 8° +/- 3° beträgt.

4. Bürstenkopf nach einem der vorhergehenden Ansprüche, wobei das Borstenfeld (10) eine zur Verkippung des Borstenträgers (7) und/oder der Borstenfeldhauptachse (46) gegenläufig geneigte Arbeitsfläche (34) besitzt.

5. Bürstenkopf nach dem vorhergehenden Anspruch, wobei ein Neigungswinkel (?) der Arbeitsfläche (34) zur Senkrechten auf die Borstenfeldhauptachse (46) kleiner ist als der Neigungswinkel F der Borstenfeldhauptachse (46) zur Senkrechten auf die Bürstenkopflängsachse, insbesondere etwa 25% bis 65%, vorzugsweise etwa 40% des genannten Neigungswinkels (F) beträgt.

6. Bürstenkopf nach dem vorhergehenden Anspruch, wobei der Neigungswinkel (?) der Arbeitsfläche (34) zur Senkrechten auf die Borstenfeldhauptachse (46) im Bereich von 1,5° bis 4,5°, insbesondere etwa 3,5° +/- 1° beträgt.

7. Bürstenkopf nach einem der vorhergehenden Ansprüche, wobei der Borstenträger (7) von einer dem Zahnbürstenhandteil (2) bestimmungsgemäß zugewandten Bürstenkopfseite weggekippt ist derart, dass zwischen der Borstenfeldhauptachse (46) und einem dem Zahnbürstenhandteil bestimmungsgemäß zugewandten Abschnitt der Bürstenkopflängsachse ein stumpfer Winkel (?) vorgesehen ist.

8. Bürstenkopf nach einem der vorhergehenden Ansprüche, wobei der Borstenträger (7) eine runde, von der Kreisform abweichende Form besitzt, insbesondere oval oder ellipsenförmig ausgebildet ist, wobei vorzugsweise die Borstenbüschel (11, 13, 31, 32) in der Draufsicht auf den Borstenträger (7) betrachtet symmetrisch bezüglich der Hauptachsen des Borstenträgers (7) und/oder rotationssymmetrisch angeordnet sind, derart, dass die Befestigungsorte der Borstenbüschel am Borstenträger (7) durch eine 180°-Drehung ineinander überführbar sind.

9. Bürstenkopf nach einem der vorhergehenden Ansprüche, wobei an einem Rand des Borstenfelds (10) äußere, in der Draufsicht vorzugsweise längliche Borstenbüschel (11) mit einer größeren Höhe als im Borstenfeld weiter innenliegende, inneren Borstenbüschel (13) vorgesehen sind derart, dass eine zentrale Vertiefung (16) in der von den freien Enden der Borstenbüschel definierten Arbeitsfläche (34) gebildet ist, wobei vorzugsweise zwischen der zentralen Vertiefung (16) und den genannten äußeren Borstenbüscheln (11) mit der größeren Höhe ein stufenförmiger Höhensprung vorgesehen ist, wobei vorzugsweise wobei die zentrale Vertiefung (16) einen rinnenförmigen Boden besitzt, der in eine Richtung gewölbt ist und in der dazu senkrechten Richtung im Wesentlichen gerade ausgebildet ist und vorzugsweise der rinnenförmige Boden (17) der zentralen Vertiefung (16) zu einer Umfangsseite des Borstenträgers (7) hin stärker ansteigend als zur gegenüberliegenden Umfangsseite hin ausgebildet ist, insbesondere eine etwa bananenförmige, asymmetrische Wölbung besitzt.

10. Bürstenkopf nach dem vorhergehenden Anspruch, wobei die inneren Borstenbüschel (13) unterschiedliche Höhen besitzen, wobei die Höhe der inneren Borstenbüschel (13) mit zunehmendem Abstand der Borstenbüschel von einer Mitte des Borstenträgers (7) zunimmt derart, dass der genannte rinneneförmige Boden (17) der zentralen Vertiefung (16) ausgebildet ist, und wobei die freien Enden der inneren Borstenbüschel (13) geneigte Stirnflächen aufweisen, wobei verschiedene innere Borstenbüschel (13) Stirnflächen mit verschiedenen Neigungen besitzen derart, dass der genannte rinnenförmige Boden (17) ausgebildet ist, vorzugsweise dergestalt, daß die Neigung der Stirnflächen der inneren Borstenbüschel (13) mit zunehmendem Abstand der inneren Borstenbüschel (13) von der Mitte des Borstenträgers (7) zunehmend stärker ausgebildet ist.

11. Bürstenkopf nach dem vorhergehenden Anspruch, wobei die freien Enden der inneren Borstenbüschel (13) eine nicht ebene Stirnfläche besitzen, die gewölbt ist derart, dass eine kontinuierliche Bodenwölbung der zentralen Vertiefung (16) ausgebildet ist.

12. Bürstenkopf nach einem der vorhergehenden Ansprüche, wobei wobei die Höhe der Borstenbüschel auf jeweils einem Ring (12, 14) des Borstenfelds (10) in Umfangsrichtung des jeweiligen Rings betrachtet zyklisch zu- und abnimmt, insbesondere von einem ersten Minimalwert zu einem zweiten Maximalwert zunimmt, dann wieder auf den ersten Minimalwert abfällt, daraufhin wieder auf einen zweiten Maximalwert ansteigt und schließlich wieder auf den ersten Minimalwert abfällt.

13. Bürstenkopf nach dem einem der vorhergehenden Ansprüche 9 bis 12, wobei die äußeren Borstenbüschel (11) an ihren freien Enden Abschrägungen (18) aufweisen, wobei vorzugsweise die Abschrägungen (18) gegenüber einem Flachabschnitt (19) der freien Enden der Borstenbüschel (11) unter einem Winkel ? geneigt sind, der zwischen 25° und 60° beträgt, und/oder sich über 25 % bis 75 % einer Breite W des jeweiligen Borstenbüschels (11) erstrecken, wobei die genannte Breite W die Erstreckung des Borstenbüschels (11) senkrecht zu dessen Längsachse und quer zu der Längserstreckung der jeweiligen Abschrägung (18) meint, wobei vorzugsweise die Abschrägungen (18) an einer außen liegenden Kante der freien Enden der Borstenbüschel (11) vorgesehen sind, die der Umfangsseite des Borstenträgers (7) zugewandt ist, und wobei die Abschrägungen (18) jeweils eine ebene Fläche definieren oder einen gekrümmten Verlauf besitzen.

14. Bürstenkopf nach einem der vorhergehenden Ansprüche 9 bis 13, wobei die genannten äußeren Borstenbüschel (11) zur Umfangsseite des Borstenträgers (7) hin unter einem spitzen Winkel a im Bereich von 1,5° bis 150°, vorzugsweise 3° bis 10°, geneigt sind, wobei vorzugsweise die genannten äußeren Borstenbüschel bei Betrachtung eines Längsschnitts des Borstenbüschels (11) trapezförmig ausgebildet sind, wobei das freie Ende des jeweiligen Borstenbüschels (11) breiter als das innere Ende hiervon ausgebildet ist, wobei vorzugsweise eine Innenflanke der genannten äußeren Borstenbüschel (11), die den inneren Borstenbüschel (13) zugewandt ist, sich im Wesentlichen senkrecht zur Oberfläche des Borstenträgers (7) erstreckt und zumindest eine Außenflanke der genannten äußeren Borstenbüschel (11) zur Umfangsseite des Borstenträgers (7) hin unter einem spitzen Winkel zu einer Senkrechten auf den Borstenträger geneigt ist.

15. Bürstenkopf nach dem vorhergehenden Anspruch, wobei die Rotationsachse (9) bezüglich einer Mitte des Borstenträgers (7) exzentrisch versetzt angeordnet und/oder gegenüber einer Senkrechten auf den Borstenträger (7) spitzwinklig verkippt angeordnet ist.

16. Bürstenkopf nach einem der vorhergehenden Ansprüche, wobei äußere länglichen Borstenbüschel (11) mit ihren freien Enden eine Stirnfläche bilden, die eine längliche Kontur mit einer Längsachse definieren, die einen gekrümmten Verlauf besitzt, insbesondere bogenförmig, vorzugsweise kreisförmig um die Rotationsachse (9) gekrümmt ist, wobei vorzugsweise die äußeren Borstenbüschel (11) an ihren Stirnflächen gekrümmt ausgebildete Abschrägungen (18) besitzen, deren Längsachse sich um die genannte Rotationsachse (9) herum wölbt, insbesondere kreisförmig um die genannte Rotationsachse (9) herum wölbt.

17. Bürstenkopf nach einem der vorhergehenden Ansprüche, wobei eine Mehrzahl von Borstenbüscheln (11, 13a, 13b, 13c) in mehreren ineinanderliegenden Ringen oder ähnlichen Konturen auf dem Borstenträger (7) angeordnet sind, wobei auf einem äußeren Ring (12) auf gegenüberliegenden Seiten längliche Borstenbüschel (11) mit einem länglichen Büschelquerschnitt angeordnet sind und auf einem mittleren Ring (14) innerhalb des äußeren Rings (12) mehrere Borstenbüschel (13a, 13b) angeordnet sind, die jeweils einen Querschnitt kleiner als der Querschnitt der länglichen Borstenbüschel (11) des äußeren Rings (12) besitzen, wobei in einem Zentralbereich innerhalb des genannten mittleren Rings (14) zumindest ein Borstenbüschel (13c) mit einem Querschnitt größer oder gleich als der Querschnitt der Borstenbüschel (13a, 13b) des mittleren Rings (14) vorgesehen ist.

18. Bürstenkopf nach einem der vorhergehenden Ansprüche, wobei in zumindest einem Borstenbüschel (13a, 13b, 13c) Borsten mit aufspleissende Enden mit aufspleißfreien Borsten, insbesondere längsrippenfreien, vorzugsweise etwa runden oder rundlichen Borsten, gemischt sind.

19. Bürstenkopf nach dem vorhergehenden Anspruch, wobei ein Mischverhältnis von 50% +/- 10% Borsten nach einem der Ansprüche 1 bis 10 zu 50% +/- 10% aufspleißfreien Borsten vorgesehen ist.

20. Bürstenkopf nach einem der beiden vorhergehenden Ansprüche, wobei die Borstenbüschel mit aufspleissenden Borsten in einem Innen- und/oder Zentralbereich vorgesehen sind.

21. Elektrische Zahnbürste mit einem Bürstenkopf nach einem der vorhergehenden Ansprüche.
